# EUROPEAN PATENT SPECIFICATION

(11) **EP 3 059 991 B1**
(45) Date of publication and mention of the grant of the patent: **22.05.2019**
(21) Application number: 13896862.3
(22) Date of filing: 11.11.2013
(51) Int. Cl.: H04W 72/04, H04W 92/12

(54) **METHOD AND DEVICE FOR ALLOCATING CHANNEL AND RELEASING LINK**
VERFAHREN UND VORRICHTUNG ZUR KANALZUTEILUNG UND VERBINDUNGSFREIGABE
PROCÉDÉ ET DISPOSITIF POUR ATTRIBUER UN CANAL ET LIBÉRER UNE LIAISON

(43) Date of publication of application: 24.08.2016
(73) Proprietor: Huawei Technologies Co., Ltd., Longgang District Shenzhen, Guangdong 518129 (CN)
(72) Inventor: SHI, Qian, Shenzhen Guangdong 518129 (CN); YANG, Kai, Shenzhen Guangdong 518129 (CN)
(74) Representative: Pfenning, Meinig & Partner mbB
(86) International application number: PCT/CN2013/086848
(87) International publication number: WO 2015/066918

(56) References cited:
- EP-A1- 1 131 966
- EP-A2- 1 467 588
- CN-A- 1 741 667
- CN-A- 101 009 873
- CN-A- 101 247 556
- CN-A- 102 118 871
- CN-C- 100 525 480
- US-A1- 2007 177 543

## Description

### TECHNICAL FIELD

The present invention relates to the field of wireless communications technologies, and in particular, to a method and device for channel allocation and link release.

### BACKGROUND

With emergence of smartphones, packet data services take on a trend of drastic growth. The growing packet services are mainly EGPRS (Enhanced General Packet Radio Services, enhanced general packet radio services). In a TDM (Time Division Multiplexing, time division multiplexing) transmission mode, expansion of EGPRS resources also brings about a problem of shortage of Abis link resources.

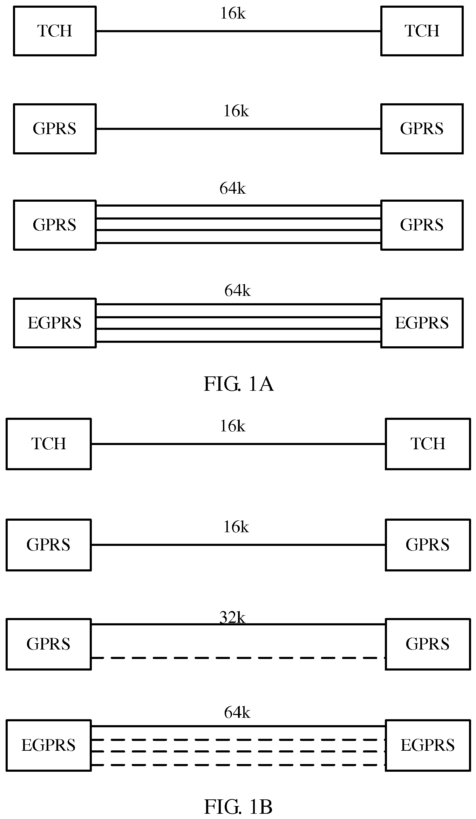

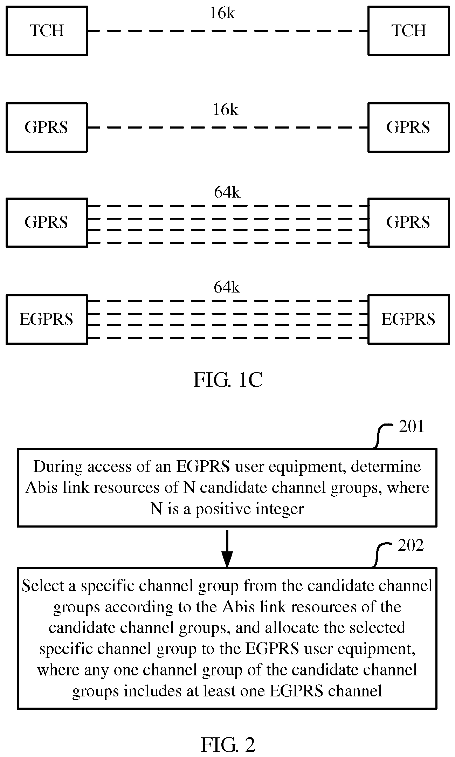

Currently, there are the following three manners for configuring Abis link resources of EGPRS resources:
1. Statically configuring Abis link resources: An Abis link is fixedly bound to an EGPRS channel; the Abis link bound to the EGPRS channel cannot be released, and a new Abis link cannot be bound to the EGPRS channel. Reference may be made to FIG. 1A.
2. Dynamically allocating a secondary Abis link: A primary Abis link is fixedly bound to an EGPRS channel to provide most basic transmission resources; other Abis links may be bound to the EGPRS channel dynamically and used as secondary links of the EGPRS channel. Therefore, basic resources for a voice service are ensured, and mutual contending for Abis link resources by a CS (Circuit Switched, circuit switched) service and a PS (Packet Switched, packet switched) service is avoided. In addition, there is a multiplexing shared gain in Abis transmission. Reference may be made to FIG. 1B.
3. Flexi Abis (dynamically allocating Abis resources): No fixed binding relationship exists between an EGPRS channel and a transmission resource; all Abis
transmission resources on a site may be dynamically bound to the EGPRS channel, which ensures a maximized multiplexing shared gain in Abis transmission, but a problem that a CS service contends for Abis link resources of a PS service exists. Reference may be made to FIG. 1C.

When the Abis link resources do not satisfy maximum number of transmission resources required by the EGPRS channel, a user rate is reduced because the Abis link resources are insufficient. Because the foregoing manner 2 and manner 3 use a manner of dynamically configuring Abis link resources, and high-rate transmission of the PS service cannot be always ensured, to avoid impact of Abis link resource insufficiency on a PS rate, many manufacturers use a manner of statically configuring Abis link resources. However, because the statically configured Abis links are fixed and unchanged, a maximum quantity of Abis links need to be configured, which may cause a waste of many resources.

Currently, for a dynamic Abis link, there is no complete release solution.

In conclusion, currently there is still no solution to reducing the impact of Abis link resource insufficiency on the PS rate under a prerequisite that the waste of resources is reduced, and there is no solution to releasing the dynamic Abis link. EP 1 467 588 A2 discloses that a method and system includes the steps of providing an admission control and resource reservation for radio resources; providing an admission control for the Abis interface by determining the used resources of the Abis interface, determining the needed resources for a desired throughput of a connection, and accepting the connection if the amount of the needed Abis resources is smaller than the difference between the available Abis resources and the used Abis resources; and utilizing the results of the admission control for the Abis interface as network design parameters for providing a resource reservation for Abis resources. US 2007/0177543 A1 discloses a technique for optimized assignment of Abis transmission resources based on dynamic statistical time division multiplexing, comprising assigning a set of 64 k TS's to GPRS/EGPRS services on an Abis link, and the set of 64 k TS's are shared among all BTS's connected to the Abis interface.

### SUMMARY

Embodiments of the present application provide a method and device as defined in the appended independent claims, for channel allocation and link release, which are used to provide a solution that can reduce impact of Abis link resource insufficiency on a PS rate under a prerequisite that a waste of resources is reduced.

The embodiments of the present application further provide a method and device for link release, which are used to release dynamic Abis links.

According to a first aspect, a method for channel allocation is provided, including:
during access of an enhanced general packet radio service EGPRS user equipment, determining Abis link resources of N candidate channel groups, where N is a positive integer; and
selecting a specific channel group from the candidate channel groups according to the Abis link resources of the candidate channel groups, and allocating the selected specific channel group to the EGPRS user equipment, where
any one channel group of the candidate channel groups includes at least one EGPRS channel.

With reference to the first aspect, in a first possible implementation manner, the selecting a specific channel group from the candidate channel groups according to the Abis link resources of the candidate channel groups includes:
if there is one channel group having maximum Abis link resources in the candidate channel groups, selecting the channel group having the maximum Abis link resources as the specific channel group; or
otherwise, selecting, from channel groups having maximum Abis link resources in the candidate channel groups, a channel group having minimum load as the specific channel group.

With reference to the first aspect or the first possible implementation manner of the first aspect, in a second possible implementation manner, the determining Abis link resources of N candidate channel groups includes:
determining Abis link resources of each EGPRS channel in any one channel group of the N candidate channel groups; and
obtaining Abis link resources of the any one channel group according to the determined Abis link resources of each EGPRS channel.

With reference to the second possible implementation manner of the first aspect, in a third possible implementation manner, the determining Abis link resources of each EGPRS channel in any one channel group of the N candidate channel groups includes:
for an EGPRS channel in the any one channel group, if current load of the EGPRS channel is not greater than a comparison threshold, using a sum of actual Abis link resources of all EGPRS channels in a candidate channel group to which the EGPRS channel belongs, as Abis link resources of the EGPRS channel; and if the current load of the EGPRS channel is greater than the comparison threshold, determining that Abis link resources of the EGPRS channel are a set value, where
if the current load of the EGPRS channel is not greater than the comparison threshold, actual Abis link resources of the EGPRS channel are determined according to bound Abis links, or otherwise, actual Abis link resources of the EGPRS channel are the set value.

With reference to the third possible implementation manner of the first aspect, in a fourth possible implementation manner, the comparison threshold is a product of a multiplex threshold for preferential EGPRS channel allocation and a target temporary block flow TBF multiplex extent threshold.

With reference to the first aspect or one of the first possible implementation manner to the fourth possible implementation manner of the first aspect, in a fifth possible implementation manner, the candidate channel groups include a dynamic EGPRS channel, and the method further includes:
if Abis links bound to the dynamic EGPRS channel are less than the maximum Abis link resources, and idle Abis links exist currently, binding the idle Abis links to the any one EGPRS channel.

With reference to the fifth possible implementation manner of the first aspect, in a sixth possible implementation manner, the binding the idle Abis links to the dynamic EGPRS channel includes:
determining, according to a coding scheme supported by the dynamic EGPRS channel and Abis link resources corresponding to the coding scheme, a quantity of Abis links to be bound to the dynamic EGPRS channel; and
binding the idle Abis links to the dynamic EGPRS channel according to the determined quantity of the Abis links to be bound, where
a quantity of the idle Abis links bound to the dynamic EGPRS channel is not greater than the determined quantity of the Abis links to be bound.

With reference to the first aspect or one of the first possible implementation manner to the sixth possible implementation manner of the first aspect, in a seventh possible implementation manner, the candidate channel groups include a static EGPRS channel, and the method further includes:
after a cell is started, binding Abis links to the static EGPRS channel.

With reference to the first aspect or one of the first possible implementation manner to the sixth possible implementation manner of the first aspect, in an eighth possible implementation manner, the candidate channel groups include a dynamic EGPRS channel, and the method further includes:
if the dynamic EGPRS channel is occupied by a general packet radio service GPRS user equipment, and no EGPRS user equipment is allocated to the dynamic EGPRS channel before a channel release timer corresponding to the dynamic EGPRS channel expires, performing first link release processing for the dynamic EGPRS channel after an Abis timeslot release timer corresponding to the dynamic EGPRS channel expires; or
if the dynamic EGPRS channel is in an idle state, performing second link release processing for the dynamic EGPRS channel after an Abis timeslot release timer corresponding to the dynamic EGPRS channel expires, where
Abis links bound to the dynamic EGPRS channel are dynamically allocated, and the idle Abis links are Abis links that are not bound to any one EGPRS channel.

With reference to the eighth possible implementation manner of the first aspect, in a ninth possible implementation manner, the performing first link release processing for the dynamic EGPRS channel if the EGPRS channel is occupied by a GPRS user equipment includes:
if a coding scheme used by the GPRS user equipment can be determined, performing link release processing for the dynamic EGPRS channel according to the coding scheme used by the GPRS user equipment; otherwise, reserving one primary link and one secondary link that are bound to the dynamic EGPRS channel, and releasing other unused Abis links bound to the dynamic EGPRS channel; or
reserving one primary link and one secondary link that are bound to the dynamic EGPRS channel, and releasing other Abis links bound to the dynamic EGPRS channel.

With reference to the eighth possible implementation manner of the first aspect, in a tenth possible implementation manner, the performing second link release processing for the dynamic EGPRS channel if the dynamic EGPRS channel is in an idle state includes:
if the dynamic EGPRS channel is occupied by the GPRS user equipment before the dynamic EGPRS channel is in the idle state, and a coding scheme used by the GPRS user equipment can be determined, performing link release processing for the dynamic EGPRS channel according to the coding scheme used by the GPRS user equipment; otherwise, reserving only one primary Abis link bound to the EGPRS channel, and releasing other unused Abis links bound to the EGPRS channel; or
reserving only one primary Abis link bound to the dynamic EGPRS channel, and releasing other Abis links bound to the dynamic EGPRS channel.

With reference to the ninth possible implementation manner or tenth possible implementation manner of the first aspect, in an eleventh possible implementation manner, the performing link release processing for the dynamic EGPRS channel according to the coding scheme used by the GPRS user equipment includes:
determining whether the GPRS user equipment uses a preset coding scheme, and if yes, reserving one primary link and one secondary link that are bound to the dynamic EGPRS channel, and releasing other Abis links bound to the dynamic EGPRS channel; otherwise, reserving only one primary Abis link bound to the dynamic EGPRS channel, and releasing other Abis links bound to the dynamic EGPRS channel.

According to a second aspect, a method for link release is provided, including:
if a dynamic enhanced general packet radio service EGPRS channel is occupied by a general packet radio service GPRS user equipment, and no EGPRS user equipment is allocated to the dynamic EGPRS channel before a channel release timer corresponding to the dynamic EGPRS channel expires, performing first link release processing for the dynamic EGPRS channel after an Abis timeslot release timer corresponding to the dynamic EGPRS channel expires; or
if the dynamic EGPRS channel is in an idle state, performing second link release processing for the dynamic EGPRS channel after an Abis timeslot release timer corresponding to the dynamic EGPRS channel expires, where

Abis links bound to the dynamic EGPRS channel are dynamically allocated.

With reference to the second aspect, in a first possible implementation manner, the performing first link release processing for the dynamic EGPRS channel when an EGPRS channel is occupied by a GPRS user equipment includes:
if a coding scheme used by the GPRS user equipment can be determined, performing link release processing for the dynamic EGPRS channel according to the coding scheme used by the GPRS user equipment; otherwise, reserving one primary link and one secondary link that are bound to the dynamic EGPRS channel, and releasing other unused Abis links bound to the dynamic EGPRS channel; or
reserving one primary link and one secondary link that are bound to the dynamic EGPRS channel, and releasing other Abis links bound to the dynamic EGPRS channel.

With reference to the second aspect, in a second possible implementation manner, the performing second link release processing for the dynamic EGPRS channel if the dynamic EGPRS channel is in an idle state includes:
if the dynamic EGPRS channel is occupied by the GPRS user equipment before the dynamic EGPRS channel is in the idle state, and a coding scheme used by the GPRS user equipment can be determined, performing link release processing for the dynamic EGPRS channel according to the coding scheme used by the GPRS user equipment; otherwise, reserving only one primary Abis link bound to the EGPRS channel, and releasing other unused Abis links bound to the EGPRS channel; or
reserving only one primary Abis link bound to the dynamic EGPRS channel, and releasing other Abis links bound to the dynamic EGPRS channel.

With reference to the first possible implementation manner or second possible implementation manner of the second aspect, in a third possible implementation manner, the performing link release processing for the dynamic EGPRS channel according to the coding scheme used by the GPRS user equipment includes:
determining whether the GPRS user equipment uses a preset coding scheme, and if yes, reserving one primary link and one secondary link that are bound to the dynamic EGPRS channel, and releasing other Abis links bound to the dynamic EGPRS channel; otherwise, reserving only one primary Abis link bound to the dynamic EGPRS channel, and releasing other Abis links bound to the dynamic EGPRS channel.

According to a third aspect, a device for channel allocation is provided, including:
a determining module, configured to determine Abis link resources of N candidate channel groups during access of an enhanced general packet radio service EGPRS user equipment, where N is a positive integer; and
an allocating module, configured to select a specific channel group from the candidate channel groups according to the Abis link resources of the candidate channel groups, and allocate the selected specific channel group to the EGPRS user equipment, where
any one channel group of the candidate channel groups includes at least one EGPRS channel.

With reference to the third aspect, in a first possible implementation manner, the allocating module is specifically configured to:
when selecting a specific channel group from the candidate channel groups according to the Abis link resources of the candidate channel groups, if there is one channel group having maximum Abis link resources in the candidate channel groups, select the channel group having the maximum Abis link resources, as the specific channel group; or otherwise, select a channel group having minimum load from channel groups having maximum Abis link resources in the candidate channel groups, as the specific channel group.

With reference to the third aspect or the first possible implementation manner of the third aspect, in a second possible implementation manner, the determining module is specifically configured to:
determine Abis link resources of each EGPRS channel in any one channel group of the N candidate channel groups; and obtain Abis link resources of the any one channel group according to the determined Abis link resources of each EGPRS channel.

With reference to the second possible implementation manner of the third aspect, in a third possible implementation manner, the determining module is specifically configured to:
when determining Abis link resources of each EGPRS channel in any one channel group of the N candidate channel groups, for an EGPRS channel in the any one channel group, if current load of the EGPRS channel is not greater than a comparison threshold, use a sum of actual Abis link resources of all EGPRS channels in a candidate channel group to which the EGPRS channel belongs, as Abis link resources of the EGPRS channel; and if the current load of the EGPRS channel is greater than the comparison threshold, determine that the Abis link resources of the EGPRS channel are a set value, where
if the current load of the EGPRS channel is not greater than the comparison threshold, actual Abis link resources of the EGPRS channel are determined according to bound Abis links, or otherwise, actual Abis link resources of the EGPRS channel are the set value.

With reference to the third possible implementation manner of the third aspect, in a fourth possible implementation manner, the comparison threshold is a product of a multiplex threshold for preferential EGPRS channel allocation and a target temporary block flow TBF multiplex extent threshold.

With reference to the third aspect or one of the first possible implementation manner to the fourth possible implementation manner of the third aspect, in a fifth possible implementation manner, the candidate channel groups include a dynamic EGPRS channel, and the device further includes:
a first binding module, configured to: if Abis links bound to the dynamic EGPRS channel are less than the maximum Abis link resources, and idle Abis links exist currently, bind the idle Abis links to the any one EGPRS channel.

With reference to the fifth possible implementation manner of the third aspect, in a sixth possible implementation manner, the first binding module is specifically configured to:
determine, according to a coding scheme supported by the dynamic EGPRS channel and Abis link resources corresponding to the coding scheme, a quantity of Abis links to be bound to the dynamic EGPRS channel; and bind the idle Abis links to the dynamic EGPRS channel according to the determined quantity of the Abis links to be bound, where
a quantity of the idle Abis links bound to the dynamic EGPRS channel is not greater than the determined quantity of the Abis links to be bound.

With reference to the third aspect or one of the first possible implementation manner to the sixth possible implementation manner of the third aspect, in an seventh possible implementation manner, the candidate channel groups include a static EGPRS channel, and the device further includes:
a second binding module, configured to bind Abis links to the static EGPRS channel after a cell is started.

With reference to the third aspect or one of the first possible implementation manner to the sixth possible implementation manner of the third aspect, in an eighth possible implementation manner, the candidate channel groups include a dynamic EGPRS channel, and the device further includes:
a releasing module, configured to: if the dynamic EGPRS channel is occupied by a general packet radio service GPRS user equipment, and no EGPRS user equipment is allocated to the dynamic EGPRS channel before a channel release timer corresponding to the dynamic EGPRS channel expires, perform first link release processing for the dynamic EGPRS channel after an Abis timeslot release timer corresponding to the dynamic EGPRS channel expires; or if the dynamic EGPRS channel is in an idle state, perform second link release processing for the dynamic EGPRS channel after an Abis timeslot release timer corresponding to the dynamic EGPRS channel expires, where
Abis links bound to the dynamic EGPRS channel are dynamically allocated, and the idle Abis links are Abis links that are not bound to any one EGPRS channel.

With reference to the eighth possible implementation manner of the third aspect, in a ninth possible implementation manner, the releasing module is specifically configured to:
when performing first link release processing for the dynamic EGPRS channel, if a coding scheme used by the GPRS user equipment can be determined, perform link release processing for the dynamic EGPRS channel according to the coding scheme used by the GPRS user equipment; otherwise, reserve one primary link and one secondary link that are bound to the dynamic EGPRS channel, and release other unused Abis links bound to the dynamic EGPRS channel; or reserve one primary link and one secondary link that are bound to the dynamic EGPRS channel, and release other Abis links bound to the dynamic EGPRS channel.

With reference to the eighth possible implementation manner of the third aspect, in a tenth possible implementation manner, the releasing module is specifically configured to:
when performing second link release processing for the dynamic EGPRS channel, if the dynamic EGPRS channel is occupied by the GPRS user equipment before the dynamic EGPRS channel is in the idle state, and a coding scheme used by the GPRS user equipment can be determined, perform link release processing for the dynamic EGPRS channel according to the coding scheme used by the GPRS user equipment; otherwise, reserve only one primary Abis link bound to the EGPRS channel, and release other unused Abis links bound to the EGPRS channel; or reserve only one primary Abis link bound to the dynamic EGPRS channel, and release other Abis links bound to the dynamic EGPRS channel.

With reference to the ninth possible implementation manner or tenth possible implementation manner of the third aspect, in an eleventh possible implementation manner, the releasing module is specifically configured to:
when performing link release processing for the dynamic EGPRS channel according to the coding scheme used by the GPRS user equipment, determine whether the GPRS user equipment uses a preset coding scheme, and if yes, reserve one primary link and one secondary link that are bound to the dynamic EGPRS channel, and release other Abis links bound to the dynamic EGPRS channel; otherwise, reserve only one primary Abis link bound to the dynamic EGPRS channel, and release other Abis links bound to the dynamic EGPRS channel.

According to a fourth aspect, a device for link release is provided, including:
a first releasing module, configured to: if a dynamic enhanced general packet radio service EGPRS channel is occupied by a general packet radio service GPRS user equipment, and no EGPRS user equipment is allocated to the dynamic EGPRS channel before a channel release timer corresponding to the dynamic EGPRS channel expires, perform first link release processing for the dynamic EGPRS channel after an Abis timeslot release timer corresponding to the dynamic EGPRS channel expires; and
a second releasing module, configured to: if the dynamic EGPRS channel is in an idle state, perform second link release processing for the dynamic EGPRS channel after an Abis timeslot release timer corresponding to the dynamic EGPRS channel expires, where
Abis links bound to the dynamic EGPRS channel are dynamically allocated.

With reference to the fourth aspect, in a first possible implementation manner, the first releasing module is specifically configured to:
when performing first link release processing for the dynamic EGPRS channel, if a coding scheme used by the GPRS user equipment can be determined, perform link release processing for the dynamic EGPRS channel according to the coding scheme used by the GPRS user equipment; otherwise, reserve one primary link and one secondary link that are bound to the dynamic EGPRS channel, and release other unused Abis links bound to the dynamic EGPRS channel; or reserve one primary link and one secondary link that are bound to the dynamic EGPRS channel, and release other Abis links bound to the dynamic EGPRS channel.

With reference to the fourth aspect, in a second possible implementation manner, the second releasing module is specifically configured to:
when performing second link release processing for the dynamic EGPRS channel, if the dynamic EGPRS channel is occupied by the GPRS user equipment before the dynamic EGPRS channel is in the idle state, and a coding scheme used by the GPRS user equipment can be determined, perform link release processing for the dynamic EGPRS channel according to the coding scheme used by the GPRS user equipment; otherwise, reserve only one primary Abis link bound to the EGPRS channel, and release other unused Abis links bound to the EGPRS channel; or reserve only one primary Abis link bound to the dynamic EGPRS channel, and release other Abis links bound to the dynamic EGPRS channel.

With reference to the first possible implementation manner or second possible implementation manner of the fourth aspect, in a third possible implementation manner, the first releasing module and the second releasing module are specifically configured to:
when performing link release processing for the dynamic EGPRS channel according to the coding scheme used by the GPRS user equipment, determine whether the GPRS user equipment uses a preset coding scheme, and if yes, reserve one primary link and one secondary link that are bound to the dynamic EGPRS channel, and release other Abis links bound to the dynamic EGPRS channel; otherwise, reserve only one primary Abis link bound to the dynamic EGPRS channel, and release other Abis links bound to the dynamic EGPRS channel.

According to a fifth aspect, a device for channel allocation is provided, including:
a processor, configured to determine Abis link resources of N candidate channel groups during access of an enhanced general packet radio service EGPRS user equipment, where N is a positive integer; and select a specific channel group from the candidate channel groups according to the Abis link resources of the candidate channel groups, and allocate the selected specific channel group to the EGPRS user equipment by using a transceiver; and
the transceiver, configured to transmit and receive information under control of the processor, where
any one channel group of the candidate channel groups includes at least one EGPRS channel.

With reference to the fifth aspect, in a first possible implementation manner, the processor is specifically configured to:
when selecting a specific channel group from the candidate channel groups according to the Abis link resources of the candidate channel groups, if there is one channel group having maximum Abis link resources in the candidate channel groups, select the channel group having the maximum Abis link resources, as the specific channel group; or otherwise, select a channel group having minimum load from channel groups having maximum Abis link resources in the candidate channel groups, as the specific channel group.

With reference to the fifth aspect or the first possible implementation manner of the fifth aspect, in a second possible implementation manner, the processor is specifically configured to:
determine Abis link resources of each EGPRS channel in any one channel group of the N candidate channel groups; and obtain Abis link resources of the any one channel group according to the determined Abis link resources of each EGPRS channel.

With reference to the second possible implementation manner of the fifth aspect, in a third possible implementation manner, the processor is specifically configured to:
when determining Abis link resources of each EGPRS channel in any one channel group of the N candidate channel groups, for an EGPRS channel in the any one channel group, if current load of the EGPRS channel is not greater than a comparison threshold, use a sum of actual Abis link resources of all EGPRS channels in a candidate channel group to which the EGPRS channel belongs, as Abis link resources of the EGPRS channel; and if the current load of the EGPRS channel is greater than the comparison threshold, determine that Abis link resources of the EGPRS channel are a set value, where
if the current load of the EGPRS channel is not greater than the comparison threshold, actual Abis link resources of the EGPRS channel are determined according to bound Abis links, or otherwise, actual Abis link resources of the EGPRS channel are the set value.

With reference to the third possible implementation manner of the fifth aspect, in a fourth possible implementation manner, the comparison threshold is a product of a multiplex threshold for preferential EGPRS channel allocation and a target temporary block flow TBF multiplex extent threshold.

With reference to the fifth aspect or one of the first possible implementation manner to the fourth possible implementation manner of the fifth aspect, in a fifth possible implementation manner, the candidate channel groups include a dynamic EGPRS channel, and the processor is specifically configured to:
if Abis links bound to the dynamic EGPRS channel are less than the maximum Abis link resources, and idle Abis links exist currently, bind the idle Abis links to the any one EGPRS channel.

With reference to the fifth possible implementation manner of the fifth aspect, in a sixth possible implementation manner, the processor is specifically configured to:
determine, according to a coding scheme supported by the dynamic EGPRS channel and Abis link resources corresponding to the coding scheme, a quantity of Abis links to be bound to the dynamic EGPRS channel; and bind the idle Abis links to the dynamic EGPRS channel according to the determined quantity of the Abis links to be bound, where
a quantity of the idle Abis links bound to the dynamic EGPRS channel is not greater than the determined quantity of the Abis links to be bound.

With reference to the fifth aspect or one of the first possible implementation manner to the sixth possible implementation manner of the fifth aspect, in an seventh possible implementation manner, the candidate channel groups include a static EGPRS channel, and the processor is specifically configured to:
bind Abis links to the static EGPRS channel after a cell is started.

With reference to the fifth aspect or one of the first possible implementation manner to the sixth possible implementation manner of the fifth aspect, in an eighth possible implementation manner, the candidate channel groups include a dynamic EGPRS channel, and the processor is specifically configured to:
if the dynamic EGPRS channel is occupied by a general packet radio service GPRS user equipment, and no EGPRS user equipment is allocated to the dynamic EGPRS channel before a channel release timer corresponding to the dynamic EGPRS channel expires, perform first link release processing for the dynamic EGPRS channel after an Abis timeslot release timer corresponding to the dynamic EGPRS channel expires; or if the dynamic EGPRS channel is in an idle state, perform second link release processing for the dynamic EGPRS channel after an Abis timeslot release timer corresponding to the dynamic EGPRS channel expires, where
Abis links bound to the dynamic EGPRS channel are dynamically allocated, and the idle Abis links are Abis links that are not bound to any one EGPRS channel.

With reference to the eighth possible implementation manner of the fifth aspect, in a ninth possible implementation manner, the processor is specifically configured to:
when performing first link release processing for the dynamic EGPRS channel, if a coding scheme used by the GPRS user equipment can be determined, perform link release processing for the dynamic EGPRS channel according to the coding scheme used by the GPRS user equipment; otherwise, reserve one primary link and one secondary link that are bound to the dynamic EGPRS channel, and release other unused Abis links bound to the dynamic EGPRS channel; or reserve one primary link and one secondary link that are bound to the dynamic EGPRS channel, and release other Abis links bound to the dynamic EGPRS channel.

With reference to the eighth possible implementation manner of the fifth aspect, in a tenth possible implementation manner, the processor is specifically configured to:
when performing second link release processing for the dynamic EGPRS channel, if the dynamic EGPRS channel is occupied by the GPRS user equipment before the dynamic EGPRS channel is in the idle state, and a coding scheme used by the GPRS user equipment can be determined, perform link release processing for the dynamic EGPRS channel according to the coding scheme used by the GPRS user equipment; otherwise, reserve only one primary Abis link bound to the EGPRS channel, and release other unused Abis links bound to the EGPRS channel; or reserve only one primary Abis link bound to the dynamic EGPRS channel, and release other Abis links bound to the dynamic EGPRS channel.

With reference to the ninth possible implementation manner or tenth possible implementation manner of the fifth aspect, in an eleventh possible implementation manner, the processor is specifically configured to:
when performing link release processing for the dynamic EGPRS channel according to the coding scheme used by the GPRS user equipment, determine whether the GPRS user equipment uses a preset coding scheme, and if yes, reserve one primary link and one secondary link that are bound to the dynamic EGPRS channel, and release other Abis links bound to the dynamic EGPRS channel; otherwise, reserve only one primary Abis link bound to the dynamic EGPRS channel, and release other Abis links bound to the dynamic EGPRS channel.

According to a sixth aspect, a device for link release is provided, including:
a processor, configured to: if a dynamic enhanced general packet radio service EGPRS channel is occupied by a GPRS user equipment, and no EGPRS user equipment is allocated to the dynamic EGPRS channel before a channel release timer corresponding to the dynamic EGPRS channel expires, perform first link release processing for the dynamic EGPRS channel by using a transceiver after an Abis timeslot release timer corresponding to the dynamic EGPRS channel expires; and if the dynamic EGPRS channel is in an idle state, perform second link release processing for the dynamic EGPRS channel by using the transceiver after the Abis timeslot release timer corresponding to the dynamic EGPRS channel expires; and
the transceiver, configured to transmit and receive information under control of the processor, where
Abis links bound to the dynamic EGPRS channel are dynamically allocated.

With reference to the sixth aspect, in a first possible implementation manner, the processor is specifically configured to:
when performing first link release processing for the dynamic EGPRS channel, if a coding scheme used by the GPRS user equipment can be determined, perform link release processing for the dynamic EGPRS channel according to the coding scheme used by the GPRS user equipment; otherwise, reserve one primary link and one secondary link that are bound to the dynamic EGPRS channel, and release other unused Abis links bound to the dynamic EGPRS channel; or reserve one primary link and one secondary link that are bound to the dynamic EGPRS channel, and release other Abis links bound to the dynamic EGPRS channel.

With reference to the sixth aspect, in a second possible implementation manner, the processor is specifically configured to:
when performing second link release processing for the dynamic EGPRS channel, if the dynamic EGPRS channel is occupied by the GPRS user equipment before the dynamic EGPRS channel is in the idle state, and a coding scheme used by the GPRS user equipment can be determined, perform link release processing for the dynamic EGPRS channel according to the coding scheme used by the GPRS user equipment; otherwise, reserve only one primary Abis link bound to the EGPRS channel, and release other unused Abis links bound to the EGPRS channel; or reserve only one primary Abis link bound to the dynamic EGPRS channel, and release other Abis links bound to the dynamic EGPRS channel.

With reference to the first possible implementation manner or second possible implementation manner of the sixth aspect, in a third possible implementation manner, the processor is specifically configured to:
when performing link release processing for the dynamic EGPRS channel according to the coding scheme used by the GPRS user equipment, determine whether the GPRS user equipment uses a preset coding scheme, and if yes, reserve one primary link and one secondary link that are bound to the dynamic EGPRS channel, and release other Abis links bound to the dynamic EGPRS channel; otherwise, reserve only one primary Abis link bound to the dynamic EGPRS channel, and release other Abis links bound to the dynamic EGPRS channel.

In the embodiments of the present application, because a specific channel group is selected from candidate channel groups according to Abis link resources of the candidate channel groups, and the selected specific channel group is allocated to an EGPRS user equipment, channel allocation based on transmission resources is implemented. Therefore, under a prerequisite that a waste of resources is reduced, impact of Abis link resource insufficiency on a PS rate can be reduced.

In the embodiments of the present application, because link release can be performed according to different cases, dynamic Abis links are released, and resource utilization is improved.

### BRIEF DESCRIPTION OF DRAWINGS

FIG. 1A is a schematic diagram of statically configuring Abis link resources in the prior art;
FIG. 1B is a schematic diagram of dynamically applying for a secondary Abis link in the prior art;
FIG. 1C is a schematic diagram of Flexi Abis in the prior art;
FIG. 2 is a schematic flowchart of a method for channel allocation according to a first embodiment of the present application;
FIG. 3A is a schematic diagram of an effect of channel allocation according to a second embodiment of the present application;
FIG. 3B is a schematic diagram of channel allocation priorities according to a third embodiment of the present application;
FIG. 4 is a schematic flowchart of a method for channel allocation according to a fourth embodiment of the present application;
FIG. 5 is a schematic structural diagram of a device for channel allocation according to a fifth embodiment of the present application;
FIG. 6 is a schematic structural diagram of a device for channel allocation according to a sixth embodiment of the present application;
FIG. 7 is a schematic flowchart of a method for link release according to a seventh embodiment of the present application;
FIG. 8 is a schematic structural diagram of a device for link release according to an eighth embodiment of the present application; and
FIG. 9 is a schematic structural diagram of a device for link release according to a ninth embodiment of the present application.

### DESCRIPTION OF EMBODIMENTS

In embodiments of the present application, during access of an enhanced general packet radio service EGPRS user equipment, Abis link resources of N candidate channel groups are determined, where N is a positive integer; and a specific channel group is selected from the candidate channel groups according to the Abis link resources of the candidate channel groups, and the selected specific channel group is allocated to the EGPRS user equipment, where any one channel group of the candidate channel groups includes at least one EGPRS channel. Because a specific channel group is selected from candidate channel groups according to Abis link resources of the candidate channel groups, and the selected specific channel group is allocated to an EGPRS user equipment, channel allocation based on transmission resources is implemented. Therefore, under a prerequisite that a waste of resources is reduced, impact of Abis link resource insufficiency on a PS rate can be reduced.

The EGPRS user equipment in the embodiments of the present application refers to a user equipment supporting an EGPRS service. The EGPRS channel in the embodiments of the present application refers to a channel configured to support the EGPRS service.

As shown in FIG. 2, a method for channel allocation in a first embodiment of the present application includes:
Step 201: During access of an EGPRS user equipment, determine Abis link resources of N candidate channel groups, where N is a positive integer.
Step 202: Select a specific channel group from the candidate channel groups according to the Abis link resources of the candidate channel groups, and allocate the selected specific channel group to the EGPRS user equipment.

Any one channel group of the candidate channel groups includes at least one EGPRS channel.

During implementation, in the embodiment of the present application, a specific channel group is preferentially allocated to an EGPRS user equipment during access of the EGPRS user equipment.

Specifically, if there is one channel group having maximum Abis link resources in the candidate channel groups, the channel group having the maximum Abis link resources is selected as the specific channel group.

When the Abis link resources of the N candidate channel groups are determined, Abis link resources of each EGPRS channel in any one channel group of the N candidate channel groups are determined; and Abis link resources of the any one channel group are obtained according to the determined Abis link resources of each EGPRS channel.

During implementation, there are multiple manners for determining the Abis link resources of the N candidate channel groups, and two examples are provided as follows:
Manner 1: For an EGPRS channel in the any one channel group, if current load of the EGPRS channel is not greater than a comparison threshold, a sum of actual Abis link resources of all EGPRS channels in a candidate channel group to which the EGPRS channel belongs, is used as Abis link resources of the EGPRS channel; and if the current load of the EGPRS channel is greater than the comparison threshold, it is determined that Abis link resources of the EGPRS channel are a set value.

If the current load of the EGPRS channel is not greater than the comparison threshold, actual Abis link resources of the EGPRS channel are determined according to bound Abis links, or otherwise, actual Abis link resources of the EGPRS channel are the set value.

For example, it is assumed that M is the current load of the EGPRS channel, and that the set value is 0. During implementation, the current load of the EGPRS channel may be equal to a quantity of current TBFs on the EGPRS channel.
1. First, actual Abis link resources of each EGPRS channel in the specific channel group are determined.
   If M is less than or equal to the set comparison threshold, the actual Abis link resources of the EGPRS channel are determined according to the bound Abis links. That is, the total bound Abis link resources are the actual Abis link resources of the EGPRS channel. For example, if three Abis links (16k for each link) are bound, the actual Abis link resources of the EGPRS channel are 48k.
   If M is greater than the set comparison threshold, it is determined that the actual Abis link resources of the EGPRS channel are 0.
2. After the actual Abis link resources of each EGPRS channel in the specific channel group are determined, Abis link resources of each EGPRS channel in the specific channel group may be determined.
   If M is less than or equal to the set comparison threshold, it is determined that the Abis link resources of the EGPRS channel are equal to the sum of actual Abis link resources of all EGPRS channels in the candidate channel group to which the EGPRS channel belongs; and
   if M is greater than the set comparison threshold, it is determined that the Abis link resources of the EGPRS channel are 0.
3. After the Abis link resources of each EGPRS channel in the specific channel group are determined, the Abis link resources of each EGPRS channel in the specific channel group may be added up to obtain Abis link resources of the specific channel group; or
   after the Abis link resources of each EGPRS channel in the specific channel group are determined, the Abis link resources of each EGPRS channel in the specific channel group may be further multiplied by a weight corresponding to each EGPRS channel, and then values obtained by the multiplication are added up to obtain Abis link resources of the specific channel group. The specific weight may be determined and adjusted according to a requirement.

Preferably, the comparison threshold is a product of a multiplex threshold for preferential EGPRS channel allocation and a target TBF multiplex extent threshold. The multiplex threshold for preferential EGPRS channel allocation indicates an extent to which a TBF multiplex upper limit is reached. The multiplex threshold for preferential EGPRS channel allocation may be indicated by a percentage, for example, 65%, indicating that 65% of the TBF multiplex upper limit is reached.

The threshold in manner 1 may be determined according to a requirement or a simulation manner, and configured in advance.

Manner 2: For an EGPRS channel, a sum of Abis link resources of all EGPRS channels in the specific channel group to which the EGPRS channel belongs, is used as Abis link resources of the EGPRS channel.

In manner 2, the Abis link resources of each EGPRS channel are determined first. Herein, the Abis link resources of the EGPRS channel may be actual Abis link resources of the EGPRS channel, or may be equal to the sum of the actual Abis link resources of all EGPRS channels in the specific channel group.

The actual Abis link resources of the EGPRS channel are determined according to the bound Abis links. For example, there is 16k for one Abis link; if four Abis links are bound to an EGPRS channel, actual Abis link resources of the EGPRS channel are 64k.

After the Abis link resources of each EGPRS channel are determined, the Abis link resources of each EGPRS channel may be further multiplied by a weight corresponding to the EGPRS channel, and then values obtained by the multiplication are added up to obtain Abis link resources of the specific channel group. The specific weight may be determined and adjusted according to a requirement.

For example, there is 16k for one Abis link; if four Abis links are bound to an EGPRS channel, and a weight of each EGPRS channel is 1, current Abis link resources of the EGPRS channel are 64k.

After the Abis link resources of each EGPRS channel are determined, the Abis link resources of each EGPRS channel may be added up to obtain the Abis link resources of the specific channel group; or
the Abis link resources of each EGPRS channel in the specific channel group may be further multiplied by the weight corresponding to each EGPRS channel, and then values obtained by the multiplication are added up to obtain the Abis link resources of the specific channel group. The specific weight may be determined and adjusted according to a requirement.

If no specific channel group (for example, multiple specific channel groups have the maximum quantity of resources) can be allocated to the EGPRS user equipment according to the Abis link resources of the candidate channel groups, a specific channel group may be allocated to the EGPRS user equipment further according to load.

Specifically, if at least two channel groups having the maximum Abis link resources exist in the candidate channel groups, a channel group having minimum load is selected from the channel groups having the maximum Abis link resources in the candidate channel groups, as the specific channel group.

Preferably, the specific channel group having the minimum load may be selected from multiple specific channel groups.

If there are multiple specific channel groups having the minimum load, one may be randomly selected from the multiple specific channel groups having the minimum load.

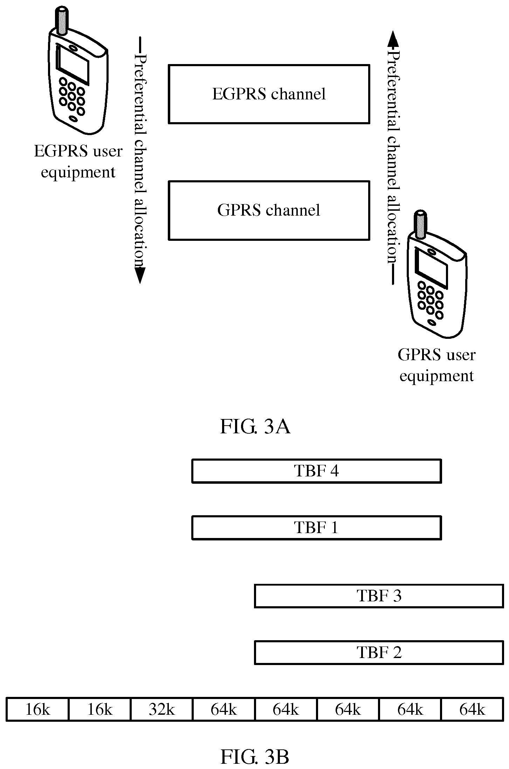

As may be seen from the foregoing content, in the embodiment of the present application, the specific channel group is allocated to the EGPRS user equipment according to the following priorities:
1. The EGPRS user equipment is preferentially allocated to the EGPRS channel (namely, a specific channel group is selected). For details, reference may be made to FIG. 3A.
2. The EGPRS user equipment is preferentially allocated to a specific channel group having more Abis link resources (namely, a specific channel group is selected according to the Abis link resources of the candidate channel groups). For details, reference may be made to FIG. 3B.
3. The EGPRS user equipment is preferentially allocated to a specific channel group that is less multiplexed (namely, a specific channel group having minimum load is selected). For details, reference may be made to FIG. 3B.

Preferably, maximum Abis link resources corresponding to bound Abis links supported by an EGPRS channel are 64k.

During implementation, in the embodiment of the present application, not only an EGPRS channel may be allocated, but also Abis links may be bound to the EGPRS channel.

The candidate channel groups in the embodiment of the present application include a dynamic EGPRS channel.

For the dynamic EGPRS channel, if Abis links bound to the dynamic EGPRS channel are less than the maximum Abis link resources, and idle Abis links exist currently, the idle Abis links are bound to the any one EGPRS channel.

During implementation, Abis link binding may be performed periodically or Abis link binding is performed by event triggering.

The maximum Abis link resources are a maximum quantity of Abis link resources that can be bound to a dynamic EGPRS channel. If the Abis links bound to the dynamic EGPRS channel are less than the maximum Abis link resources, it indicates that an Abis link may be bound to the dynamic EGPRS channel. An idle Abis link is an Abis link that is not bound to an EGPRS channel.

For example, maximum Abis link resources corresponding to bound Abis links supported by an EGPRS channel are 64k, that is, a sum of Abis link resources of all bound Abis links cannot be greater than 64k.

When Abis link binding is performed by triggering, if Abis link resources corresponding to currently bound Abis links are less than 64k, idle Abis links may be bound to a specific EGPRS channel.

The sum of Abis link resources of all bound Abis links cannot be greater than 64k.

Each Abis link can be bound to only one EGPRS channel at the same time.

Preferably, events for triggering Abis link binding in the embodiment of the present application include but are not limited to one of the following events:
a TCH (Traffic Channel, traffic channel) is converted into an EGPRS PDCH (Packet Data Channel, packet data channel), a binding instruction triggered by a user is received, and a packet channel release instruction is received.

Preferably, when the idle Abis links are bound to the dynamic EGPRS channel, a quantity of Abis links to be bound to the dynamic EGPRS channel is determined according to a coding scheme supported by the dynamic EGPRS channel and Abis link resources corresponding to the coding scheme; and the idle Abis links are bound to the dynamic EGPRS channel according to the determined quantity of the Abis links to be bound, where a quantity of the idle Abis links bound to the dynamic EGPRS channel is not greater than the determined quantity of the Abis links to be bound.

For example, a highest coding scheme of an EGPRS channel is MCS (Modulation and coding scheme, modulation and coding scheme) 9, and required Abis link resources are 64K. Therefore, if 32k Abis link resources are already bound to a current EGPRS channel, two more Abis links need to be bound.

Binding Abis links to a dynamic EGPRS channel is described above. Further, in the embodiment of the present application, after a cell is started, Abis links may be bound to a static EGPRS channel.

For the static EGPRS channel, the Abis links bound to the static EGPRS channel are not more than maximum Abis link resources.

By using a static EGPRS channel that supports binding of 64k Abis link resources at most as an example, assuming that there is 16k for one Abis link, a maximum of four Abis links may be bound to the static EGPRS channel, or less than four Abis links may also be bound according to a requirement.

During implementation, in the embodiment of the present application, not only an EGPRS channel may be allocated and Abis links may be bound to the EGPRS channel, but also the bound Abis links may be released.

Specifically, if the dynamic EGPRS channel is occupied by a GPRS (General Packet Radio Service, general packet radio service) user equipment, and no EGPRS user equipment is allocated to the dynamic EGPRS channel before a channel release timer corresponding to the dynamic EGPRS channel expires, first link release processing is performed for the dynamic EGPRS channel after an Abis timeslot release timer corresponding to the dynamic EGPRS channel expires; or
if the dynamic EGPRS channel is in an idle state, second link release processing is performed for the dynamic EGPRS channel after an Abis timeslot release timer corresponding to the dynamic EGPRS channel expires; or
after a channel release timer corresponding to the dynamic EGPRS channel expires, only one primary Abis link of the dynamic EGPRS channel is reserved, and other unused Abis links of the dynamic EGPRS channel are released.

Abis links bound to the dynamic EGPRS channel are dynamically allocated, and the idle Abis links are Abis links that are not bound to any one EGPRS channel.

During implementation, there are multiple manners for releasing links, and several examples are provided as follows:
Manner 1: Link release processing is performed according to a coding scheme used by a GPRS user equipment.

Specifically, the performing first link release processing for the dynamic EGPRS channel if the EGPRS channel is occupied by a GPRS user equipment includes:
if a coding scheme used by the GPRS user equipment can be determined, performing link release processing for the dynamic EGPRS channel according to the coding scheme used by the GPRS user equipment; otherwise, reserving one primary link and one secondary link that are bound to the dynamic EGPRS channel, and releasing other unused Abis links bound to the dynamic EGPRS channel; and
the performing second link release processing for the dynamic EGPRS channel if the dynamic EGPRS channel is in an idle state includes:
   if the dynamic EGPRS channel is occupied by the GPRS user equipment before the dynamic EGPRS channel is in the idle state, and the coding scheme used by the GPRS user equipment can be determined, performing link release processing for the dynamic EGPRS channel according to the coding scheme used by the GPRS user equipment; otherwise, reserving only one primary Abis link bound to the EGPRS channel, and releasing other unused Abis links bound to the EGPRS channel.

When second link release processing is performed for the dynamic EGPRS channel, the step in the otherwise clause is executed if one of the following three cases occurs:
Case 1: The dynamic EGPRS channel is not occupied by the GPRS user equipment before the dynamic EGPRS channel is in the idle state, but the coding scheme used by the GPRS user equipment can be determined.
Case 2: The dynamic EGPRS channel is occupied by the GPRS user equipment before the dynamic EGPRS channel is in the idle state, but the coding scheme used by the GPRS user equipment cannot be determined.
Case 3: The dynamic EGPRS channel is not occupied by the GPRS user equipment before the dynamic EGPRS channel is in the idle state, and the coding scheme used by the GPRS user equipment cannot be determined.

If first link release processing needs to be performed according to the coding scheme used by the GPRS user equipment, whether the GPRS user equipment uses a preset coding scheme is determined, and if yes, one primary link and one secondary link that are bound to the dynamic EGPRS channel are reserved, and other Abis links bound to the dynamic EGPRS channel are released; otherwise, only one primary Abis link bound to the dynamic EGPRS channel is reserved, and other Abis links bound to the dynamic EGPRS channel are released.

If second link release processing needs to be performed according to the coding scheme used by the GPRS user equipment, whether the GPRS user equipment uses a preset coding scheme is determined, and if yes, one primary link and one secondary link that are bound to the dynamic EGPRS channel are reserved, and other Abis links bound to the dynamic EGPRS channel are released; otherwise, only one primary Abis link bound to the dynamic EGPRS channel is reserved, and other Abis links bound to the dynamic EGPRS channel are released.

The preset coding scheme may be set according to a requirement, and there may be one or more coding schemes. For example, whether the GPRS user equipment uses GPRS coding schemes of CS3 and CS4 is determined, and if not, only one primary Abis link is reserved, or otherwise, a secondary Abis link is reserved additionally.

Preset coding schemes in a first link release processing manner and second link release processing manner may be the same, or may be different.

That maximum Abis link resources corresponding to the bound Abis links supported by an EGPRS channel are 64k is used as an example.

If an EGPRS channel is occupied by a general packet radio service GPRS user equipment, and no EGPRS user equipment is allocated to the dynamic EGPRS channel before a channel release timer corresponding to the dynamic EGPRS channel expires, redundant Abis links are released after an Abis timeslot release timer expires. Even if the channel is an EGPRS channel to which 64K Abis links are bound, the redundant Abis links also need to be released. For how many Abis links to be reserved, it is necessary to determine whether the GPRS user equipment occupying the channel uses CS3 and CS4; if yes, one primary link and a secondary link that are bound to the dynamic EGPRS channel are reserved, and other Abis links bound to the dynamic EGPRS channel are released; otherwise, only one primary Abis link bound to the dynamic EGPRS channel is reserved, and other Abis links bound to the dynamic EGPRS channel are released.

If currently it is impossible to know whether the GPRS user equipment uses the preset coding scheme, when first link release processing is performed for the dynamic EGPRS channel, one primary link and one second link that are bound to the dynamic EGPRS channel are reserved, and other unused Abis links bound to the dynamic EGPRS channel are released; when second link release processing is performed for the dynamic EGPRS channel, only one primary Abis link bound to the EGPRS channel is reserved, and other unused Abis links bound to the EGPRS channel are released.

Manner 2: Link release is performed according to a set release manner.

Specifically, the performing first link release processing for the dynamic EGPRS channel if the EGPRS channel is occupied by a GPRS user equipment includes:
reserving only one primary Abis link bound to the dynamic EGPRS channel, and releasing other Abis links bound to the dynamic EGPRS channel.

The performing second link release processing for the dynamic EGPRS channel if the dynamic EGPRS channel is in an idle state includes:
reserving only one primary Abis link bound to the dynamic EGPRS channel, and releasing other Abis links bound to the dynamic EGPRS channel.

Manner 3: Link release processing is performed according to a coding scheme used by a GPRS user equipment and according to the set release manner, that is, manner 1 and manner 2 are combined.

During implementation, one is that the first link release processing manner may use manner 1, and that the second link release processing manner may use manner 2.

Another is that the first link release processing manner may use manner 2, and that the second link release processing manner may use manner 1.

For specific details, reference may be made to manner 1 and manner 2, and no further description is provided herein.

Each EGPRS channel is corresponding to a channel release timer and an Abis timeslot release timer. Each timer is started after TBFs of all user equipments on a corresponding EGPRS channel are released, that is, both the two timers are started when there is no service on the channel. The timers are stopped and reset when a new service is accessed.

Preferably, duration of the Abis timeslot release timer is shorter than that of the channel release timer. In the embodiment of the present application, the duration of the channel release timer may be configured in advance according to a requirement.

An entity for executing the embodiment of the present application may be a base station (for example, a macro base station and a home base station), or may be an RN (relay) device, or may be other network-side devices.

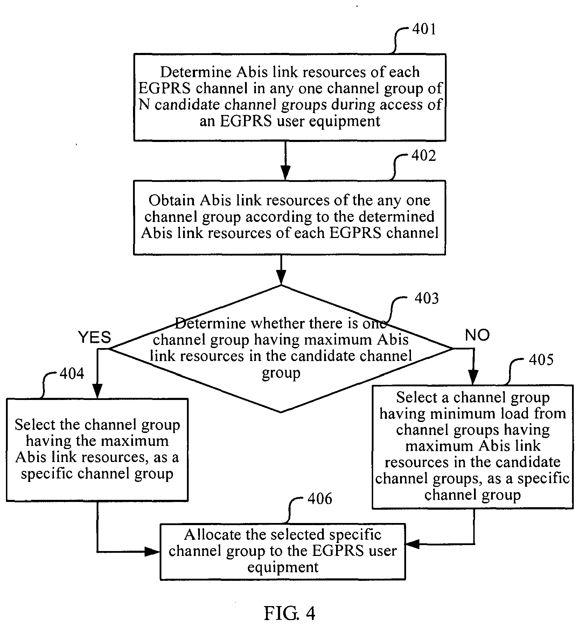

As shown in FIG. 4, a method for channel allocation in a fourth embodiment of the present application includes:
Step 401: Determine Abis link resources of each EGPRS channel in any one channel group of N candidate channel groups during access of an EGPRS user equipment.
Step 402: Obtain Abis link resources of the any one channel group according to the determined Abis link resources of each EGPRS channel.
Step 403: Determine whether there is one channel group having maximum Abis link resources in the candidate channel groups, and if yes, execute step 404, or otherwise, execute step 405.
Step 404: Select the channel group having the maximum Abis link resources, as a specific channel group, and execute step 406.
Step 405: Select a channel group having minimum load from channel groups having maximum Abis link resources in the candidate channel groups, as a specific channel group.
Step 406: Allocate the selected specific channel group to the EGPRS user equipment.

Based on a same inventive concept, afn embodiment of the present application further provides a device for channel allocation. Because a problem-solving principle of the device is similar to the method for channel allocation in the embodiment of the present application, reference may be made to implementation of the method for implementation of the device, and no repeated description is provided.

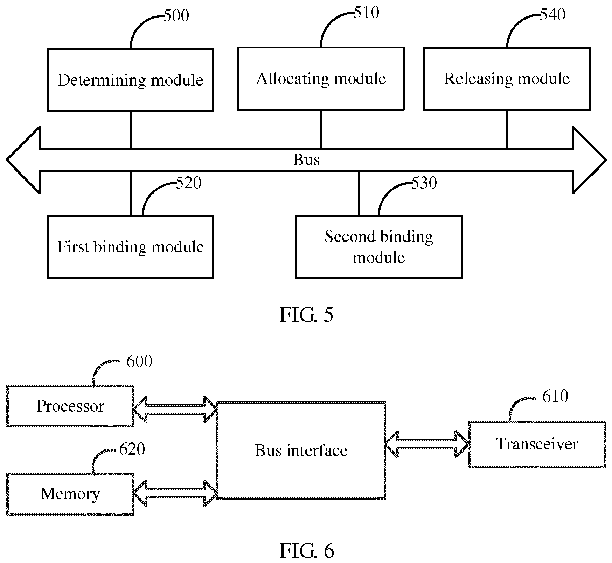

As shown in FIG. 5, a device for channel allocation in a fifth embodiment of the present application includes:
a determining module 500, configured to determine Abis link resources of N candidate channel groups during access of an enhanced general packet radio service EGPRS user equipment, where N is a positive integer; and
an allocating module 510, configured to select a specific channel group from the candidate channel groups according to the Abis link resources of the candidate channel groups, and allocate the selected specific channel group to the EGPRS user equipment, where
any one channel group of the candidate channel groups includes at least one EGPRS channel.

Preferably, the allocating module 510 is specifically configured to:
when selecting a specific channel group from the candidate channel groups according to the Abis link resources of the candidate channel groups, if there is one channel group having maximum Abis link resources in the candidate channel groups, select the channel group having the maximum Abis link resources, as the specific channel group; or otherwise, select a channel group having minimum load from channel groups having maximum Abis link resources in the candidate channel groups, as the specific channel group.

Preferably, the determining module 500 is specifically configured to:
determine Abis link resources of each EGPRS channel in any one channel group of the N candidate channel groups; and obtain Abis link resources of the any one channel group according to the determined Abis link resources of each EGPRS channel.

Preferably, the determining module 500 is specifically configured to:
when determining Abis link resources of each EGPRS channel in any one channel group of the N candidate channel groups, for an EGPRS channel in the any one channel group, if current load of the EGPRS channel is not greater than a comparison threshold, use a sum of actual Abis link resources of all EGPRS channels in a candidate channel group to which the EGPRS channel belongs, as Abis link resources of the EGPRS channel; and if the current load of the EGPRS channel is greater than the comparison threshold, determine that Abis link resources of the EGPRS channel are a set value, where
if the current load of the EGPRS channel is not greater than the comparison threshold, actual Abis link resources of the EGPRS channel are determined according to bound Abis links, or otherwise, actual Abis link resources of the EGPRS channel are the set value.

Preferably, the comparison threshold is a product of a multiplex threshold for preferential EGPRS channel allocation and a target temporary block flow TBF multiplex extent threshold.

Preferably, the candidate channel groups include a dynamic EGPRS channel, and the device may further include:
a first binding module 520, configured to: if Abis links bound to the dynamic EGPRS channel are less than the maximum Abis link resources, and idle Abis links exist currently, bind the idle Abis links to the any one EGPRS channel.

Preferably, the first binding module 520 is specifically configured to:
determine, according to a coding scheme supported by the dynamic EGPRS channel and Abis link resources corresponding to the coding scheme, a quantity of Abis links to be bound to the dynamic EGPRS channel; and bind the idle Abis links to the dynamic EGPRS channel according to the determined quantity of the Abis links to be bound, where
a quantity of the idle Abis links bound to the dynamic EGPRS channel is not greater than the determined quantity of the Abis links to be bound.

Preferably, the candidate channel groups include a static EGPRS channel, and the device may further include:
a second binding module 530, configured to bind Abis links to the static EGPRS channel after a cell is started.

Preferably, the candidate channel groups include a dynamic EGPRS channel, and the device may further include:
a releasing module 540, configured to: if the dynamic EGPRS channel is occupied by a general packet radio service GPRS user equipment, and no EGPRS user equipment is allocated to the dynamic EGPRS channel before a channel release timer corresponding to the dynamic EGPRS channel expires, perform first link release processing for the dynamic EGPRS channel after an Abis timeslot release timer corresponding to the dynamic EGPRS channel expires; or if the dynamic EGPRS channel is in an idle state, perform second link release processing for the dynamic EGPRS channel after an Abis timeslot release timer corresponding to the dynamic EGPRS channel expires, where
Abis links bound to the dynamic EGPRS channel are dynamically allocated, and the idle Abis links are Abis links that are not bound to any one EGPRS channel.

Preferably, the releasing module 540 is specifically configured to:
when performing first link release processing for the dynamic EGPRS channel, if a coding scheme used by the GPRS user equipment can be determined, perform link release processing for the dynamic EGPRS channel according to the coding scheme used by the GPRS user equipment; otherwise, reserve one primary link and one secondary link that are bound to the dynamic EGPRS channel, and release other unused Abis links bound to the dynamic EGPRS channel; or reserve one primary link and one secondary link that are bound to the dynamic EGPRS channel, and release other Abis links bound to the dynamic EGPRS channel.

Preferably, the releasing module 540 is specifically configured to:
when performing second link release processing for the dynamic EGPRS channel, if the dynamic EGPRS channel is occupied by the GPRS user equipment before the dynamic EGPRS channel is in the idle state, and a coding scheme used by the GPRS user equipment can be determined, perform link release processing for the dynamic EGPRS channel according to the coding scheme used by the GPRS user equipment; otherwise, reserve only one primary Abis link bound to the EGPRS channel, and release other unused Abis links bound to the EGPRS channel; or reserve only one primary Abis link bound to the dynamic EGPRS channel, and release other Abis links bound to the dynamic EGPRS channel.

Preferably, the releasing module 540 is specifically configured to:
when performing link release processing for the dynamic EGPRS channel according to the coding scheme used by the GPRS user equipment, determine whether the GPRS user equipment uses a preset coding scheme, and if yes, reserve one primary link and one secondary link that are bound to the dynamic EGPRS channel, and release other Abis links bound to the dynamic EGPRS channel; otherwise, reserve only one primary Abis link bound to the dynamic EGPRS channel, and release other Abis links bound to the dynamic EGPRS channel.

As shown in FIG. 6, a device for channel allocation in a sixth embodiment of the present application includes:
a processor 600, configured to determine Abis link resources of N candidate channel groups during access of an enhanced general packet radio service EGPRS user equipment, where N is a positive integer; and select a specific channel group from the candidate channel groups according to the Abis link resources of the candidate channel groups, and allocate the selected specific channel group to the EGPRS user equipment by using a transceiver 610; and
the transceiver 610, configured to transmit and receive information under control of the processor 600, where
any one channel group of the candidate channel groups includes at least one EGPRS channel.

Preferably, the processor 600 is specifically configured to:
when selecting a specific channel group from the candidate channel groups according to the Abis link resources of the candidate channel groups, if there is one channel group having maximum Abis link resources in the candidate channel groups, select the channel group having the maximum Abis link resources, as the specific channel group; or otherwise, select a channel group having minimum load from channel groups having maximum Abis link resources in the candidate channel groups, as the specific channel group.

Preferably, the processor 600 is specifically configured to:
determine Abis link resources of each EGPRS channel in any one channel group of the N candidate channel groups; and obtain Abis link resources of the any one channel group according to the determined Abis link resources of each EGPRS channel.

Preferably, the processor 600 is specifically configured to:
when determining Abis link resources of each EGPRS channel in any one channel group of the N candidate channel groups, for an EGPRS channel in the any one channel group, if current load of the EGPRS channel is not greater than a comparison threshold, use a sum of actual Abis link resources of all EGPRS channels in a candidate channel group to which the EGPRS channel belongs, as Abis link resources of the EGPRS channel; and if the current load of the EGPRS channel is greater than the comparison threshold, determine that Abis link resources of the EGPRS channel are a set value, where
if the current load of the EGPRS channel is not greater than the comparison threshold, actual Abis link resources of the EGPRS channel are determined according to bound Abis links, or otherwise, actual Abis link resources of the EGPRS channel are the set value.

Preferably, the comparison threshold is a product of a multiplex threshold for preferential EGPRS channel allocation and a target temporary block flow TBF multiplex extent threshold.

Preferably, the candidate channel groups include a dynamic EGPRS channel, and the processor 600 is specifically configured to:
if Abis links bound to the dynamic EGPRS channel are less than the maximum Abis link resources, and idle Abis links exist currently, bind the idle Abis links to the any one EGPRS channel.

Preferably, the processor 600 is specifically configured to:
determine, according to a coding scheme supported by the dynamic EGPRS channel and Abis link resources corresponding to the coding scheme, a quantity of Abis links to be bound to the dynamic EGPRS channel; and bind the idle Abis links to the dynamic EGPRS channel according to the determined quantity of the Abis links to be bound, where
a quantity of the idle Abis links bound to the dynamic EGPRS channel is not greater than the determined quantity of the Abis links to be bound.

Preferably, the candidate channel groups include a static EGPRS channel, and the processor 600 is specifically configured to:
bind Abis links to the static EGPRS channel after a cell is started.

Preferably, the candidate channel groups include a dynamic EGPRS channel, and the processor 600 is specifically configured to:
if the dynamic EGPRS channel is occupied by a general packet radio service GPRS user equipment, and no EGPRS user equipment is allocated to the dynamic EGPRS channel before a channel release timer corresponding to the dynamic EGPRS channel expires, perform first link release processing for the dynamic EGPRS channel after an Abis timeslot release timer corresponding to the dynamic EGPRS channel expires; or if the dynamic EGPRS channel is in an idle state, perform second link release processing for the dynamic EGPRS channel after an Abis timeslot release timer corresponding to the dynamic EGPRS channel expires, where
Abis links bound to the dynamic EGPRS channel are dynamically allocated, and the idle Abis links are Abis links that are not bound to any one EGPRS channel.

Preferably, the processor 600 is specifically configured to:
when performing first link release processing for the dynamic EGPRS channel, if a coding scheme used by the GPRS user equipment can be determined, perform link release processing for the dynamic EGPRS channel according to the coding scheme used by the GPRS user equipment; otherwise, reserve one primary link and one secondary link that are bound to the dynamic EGPRS channel, and release other unused Abis links bound to the dynamic EGPRS channel; or reserve one primary link and one secondary link that are bound to the dynamic EGPRS channel, and release other Abis links bound to the dynamic EGPRS channel.

Preferably, the processor 600 is specifically configured to:
when performing second link release processing for the dynamic EGPRS channel, if the dynamic EGPRS channel is occupied by the GPRS user equipment before the dynamic EGPRS channel is in the idle state, and a coding scheme used by the GPRS user equipment can be determined, perform link release processing for the dynamic EGPRS channel according to the coding scheme used by the GPRS user equipment; otherwise, reserve only one primary Abis link bound to the EGPRS channel, and release other unused Abis links bound to the EGPRS channel; or reserve only one primary Abis link bound to the dynamic EGPRS channel, and release other Abis links bound to the dynamic EGPRS channel.

Preferably, the processor 600 is specifically configured to:
when performing link release processing for the dynamic EGPRS channel according to the coding scheme used by the GPRS user equipment, determine whether the GPRS user equipment uses a preset coding scheme, and if yes, reserve one primary link and one secondary link that are bound to the dynamic EGPRS channel, and release other Abis links bound to the dynamic EGPRS channel; otherwise, reserve only one primary Abis link bound to the dynamic EGPRS channel, and release other Abis links bound to the dynamic EGPRS channel.

In FIG. 6, a bus architecture may include any quantity of interconnecting buses and bridges that are interconnected, which specifically interconnect various circuits of one or more processors represented by the processor 600 and a memory represented by a memory 620. The bus architecture may further interconnect various other circuits such as a peripheral device, a voltage regulator, and a power management circuit. These are all well known in the art, and therefore are not further described in the specification. A bus interface provides an interface. The transceiver 610 may be multiple elements, that is, may include a transmitter and a receiver, providing units for communicating with various other apparatuses on a transmission medium. The processor 600 is responsible for managing the bus architecture and general processing. The memory 620 may store data used when the processor 600 executes an operation.

The device in the embodiment of the present application may be a base station (for example, a macro base station and a home base station), or may be an RN (relay) device, or may be other network-side devices.

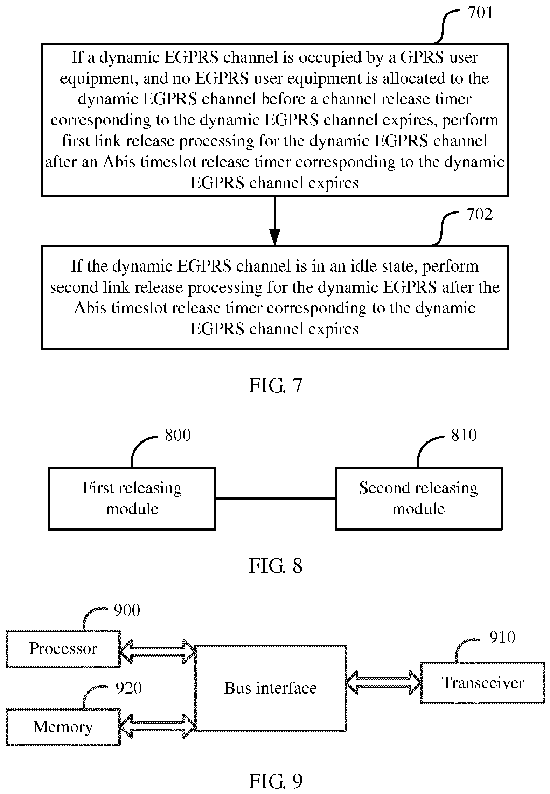

As shown in FIG. 7, a method for link release in a seventh embodiment of the present application includes:
Step 701: If a dynamic EGPRS channel is occupied by a GPRS user equipment, and no EGPRS user equipment is allocated to the dynamic EGPRS channel before a channel release timer corresponding to the dynamic EGPRS channel expires, perform first link release processing for the dynamic EGPRS channel after an Abis timeslot release timer corresponding to the dynamic EGPRS channel expires.
Step 702: If the dynamic EGPRS channel is in an idle state, perform second link release processing for the dynamic EGPRS channel after an Abis timeslot release timer corresponding to the dynamic EGPRS channel expires.

During implementation, there is no necessary time sequence relationship between step 701 and step 702. Different steps may be selected for execution according to a trigger condition. For example, if the dynamic EGPRS channel is in the idle state, it is necessary to execute the performing second link release processing for the dynamic EGPRS channel in step 702 after the Abis timeslot release timer corresponding to the dynamic EGPRS channel expires.

For another example, if the dynamic EGPRS channel is occupied by the GPRS user equipment, and no EGPRS user equipment is allocated to the dynamic EGPRS channel before the channel release timer corresponding to the dynamic EGPRS channel expires, it is necessary to execute the performing first link release processing for the dynamic EGPRS channel in step 701 after the Abis timeslot release timer corresponding to the dynamic EGPRS channel expires.

Abis links bound to the dynamic EGPRS channel are dynamically allocated, and idle Abis links are Abis links that are not bound to any one EGPRS channel.

During implementation, there are multiple manners for releasing links, and several examples are provided as follows:
Manner 1: Link release processing is performed according to a coding scheme used by a GPRS user equipment.

Specifically, the performing first link release processing for the dynamic EGPRS channel if the EGPRS channel is occupied by a GPRS user equipment includes:
if a coding scheme used by the GPRS user equipment can be determined, performing link release processing for the dynamic EGPRS channel according to the coding scheme used by the GPRS user equipment; otherwise, reserving one primary link and one secondary link that are bound to the dynamic EGPRS channel, and releasing other unused Abis links bound to the dynamic EGPRS channel; and
the performing second link release processing for the dynamic EGPRS channel if the dynamic EGPRS channel is in an idle state includes:
   if the dynamic EGPRS channel is occupied by the GPRS user equipment before the dynamic EGPRS channel is in the idle state, and the coding scheme used by the GPRS user equipment can be determined, performing link release processing for the dynamic EGPRS channel according to the coding scheme used by the GPRS user equipment; otherwise, reserving only one primary Abis link bound to the EGPRS channel, and releasing other unused Abis links bound to the EGPRS channel.

When second link release processing is performed for the dynamic EGPRS channel, the step in the otherwise clause is executed if one of the following three cases occurs:
Case 1: The dynamic EGPRS channel is not occupied by the GPRS user equipment before the dynamic EGPRS channel is in the idle state, but the coding scheme used by the GPRS user equipment can be determined.
Case 2: The dynamic EGPRS channel is occupied by the GPRS user equipment before the dynamic EGPRS channel is in the idle state, but the coding scheme used by the GPRS user equipment cannot be determined.
Case 3: The dynamic EGPRS channel is not occupied by the GPRS user equipment before the dynamic EGPRS channel is in the idle state, and the coding scheme used by the GPRS user equipment cannot be determined.

If first link release processing needs to be performed according to the coding scheme used by the GPRS user equipment, whether the GPRS user equipment uses a preset coding scheme is determined, and if yes, one primary link and one secondary link that are bound to the dynamic EGPRS channel are reserved, and other Abis links bound to the dynamic EGPRS channel are released; otherwise, only one primary Abis link bound to the dynamic EGPRS channel is reserved, and other Abis links bound to the dynamic EGPRS channel are released.

If second link release processing needs to be performed according to the coding scheme used by the GPRS user equipment, whether the GPRS user equipment uses a preset coding scheme is determined, and if yes, one primary link and one secondary link that are bound to the dynamic EGPRS channel are reserved, and other Abis links bound to the dynamic EGPRS channel are released; otherwise, only one primary Abis link bound to the dynamic EGPRS channel is reserved, and other Abis links bound to the dynamic EGPRS channel are released.

The preset coding scheme may be set according to a requirement, and there may be one or more coding schemes. For example, whether the GPRS user equipment uses GPRS coding schemes of CS3 and CS4 is determined, and if not, only one primary Abis link is reserved, or otherwise, a secondary Abis link is reserved additionally.

Preset coding schemes in a first link release processing manner and second link release processing manner may be the same, or may be different.

That maximum Abis link resources corresponding to the bound Abis links supported by an EGPRS channel are 64k is used as an example.

If an EGPRS channel is occupied by a general packet radio service GPRS user equipment, and no EGPRS user equipment is allocated to the dynamic EGPRS channel before a channel release timer corresponding to the dynamic EGPRS channel expires, redundant Abis links are released after an Abis timeslot release timer expires. Even if the channel is an EGPRS channel to which 64K Abis links are bound, the redundant Abis links also need to be released. For how many Abis links to be reserved, it is necessary to determine whether the GPRS user equipment occupying the channel uses CS3 and CS4; if yes, one primary link and one secondary link that are bound to the dynamic EGPRS channel are reserved, and other Abis links bound to the dynamic EGPRS channel are released; otherwise, only one primary Abis link bound to the dynamic EGPRS channel is reserved, and other Abis links bound to the dynamic EGPRS channel are released.

If currently it is impossible to know whether the GPRS user equipment uses the preset coding scheme, when first link release processing is performed for the dynamic EGPRS channel, one primary link and one second link that are bound to the dynamic EGPRS channel are reserved, and other unused Abis links bound to the dynamic EGPRS channel are released; when second link release processing is performed for the dynamic EGPRS channel, only one primary Abis link bound to the EGPRS channel is reserved, and other unused Abis links bound to the EGPRS channel are released.

Manner 2: Link release is performed according to a set release manner.

Specifically, the performing first link release processing for the dynamic EGPRS channel if the EGPRS channel is occupied by a GPRS user equipment includes:
reserving only one primary Abis link bound to the dynamic EGPRS channel, and releasing other Abis links bound to the dynamic EGPRS channel.

The performing second link release processing for the dynamic EGPRS channel if the dynamic EGPRS channel is in an idle state includes:
reserving only one primary Abis link bound to the dynamic EGPRS channel, and releasing other Abis links bound to the dynamic EGPRS channel.

Manner 3: Link release processing is performed according to a coding scheme used by a GPRS user equipment and according to the set release manner, that is, manner 1 and manner 2 are combined.

During implementation, one is that the first link release processing manner may use manner 1, and that the second link release processing manner may use manner 2.

Another is that the first link release processing manner may use manner 2, and that the second link release processing manner may use manner 1.

For specific details, reference may be made to manner 1 and manner 2, and no further description is provided herein.

Each EGPRS channel is corresponding to a channel release timer and an Abis timeslot release timer. Each timer is started after TBFs of all user equipments on a corresponding EGPRS channel are released, that is, both the two timers are started when there is no service on the channel. The timers are stopped and reset when a new service is accessed.

Preferably, duration of the Abis timeslot release timer is shorter than that of the channel release timer. In the embodiment of the present application, the duration of the channel release timer may be configured in advance according to a requirement.

An entity for executing the embodiment of the present application may be a base station (for example, a macro base station and a home base station), or may be an RN (relay) device, or may be other network-side devices.

Based on a same inventive concept, an embodiment of the present application further provides a device for link release. Because a problem-solving principle of the device is similar to the method for link release in the embodiment of the present application, reference may be made to implementation of the method for implementation of the device, and no repeated description is provided.

As shown in FIG. 8, a device for link release in an eighth embodiment of the present application includes:
a first releasing module 800, configured to: if a dynamic enhanced general packet radio service EGPRS channel is occupied by a GPRS user equipment, and no EGPRS user equipment is allocated to the dynamic EGPRS channel before a channel release timer corresponding to the dynamic EGPRS channel expires, perform first link release processing for the dynamic EGPRS channel after an Abis timeslot release timer corresponding to the dynamic EGPRS channel expires; and
a second releasing module 810, configured to: if the dynamic EGPRS channel is in an idle state, perform second link release processing for the dynamic EGPRS channel after an Abis timeslot release timer corresponding to the dynamic EGPRS channel expires, where

Abis links bound to the dynamic EGPRS channel are dynamically allocated, and idle Abis links are Abis links that are not bound to any one EGPRS channel.

Preferably, the first releasing module 800 is specifically configured to:
when performing first link release processing for the dynamic EGPRS channel, if a coding scheme used by the GPRS user equipment can be determined, perform link release processing for the dynamic EGPRS channel according to the coding scheme used by the GPRS user equipment; otherwise, reserve one primary link and one secondary link that are bound to the dynamic EGPRS channel, and release other unused Abis links bound to the dynamic EGPRS channel; or reserve one primary link and one secondary link that are bound to the dynamic EGPRS channel, and release other Abis links bound to the dynamic EGPRS channel.

Preferably, the second releasing module 810 is specifically configured to:
when performing second link release processing for the dynamic EGPRS channel, if the dynamic EGPRS channel is occupied by the GPRS user equipment before the dynamic EGPRS channel is in the idle state, and a coding scheme used by the GPRS user equipment can be determined, perform link release processing for the dynamic EGPRS channel according to the coding scheme used by the GPRS user equipment; otherwise, reserve only one primary Abis link bound to the EGPRS channel, and release other unused Abis links bound to the EGPRS channel; or reserve only one primary Abis link bound to the dynamic EGPRS channel, and release other Abis links bound to the dynamic EGPRS channel.

Preferably, the first releasing module 800 and the second releasing module 810 are specifically configured to:
when performing link release processing for the dynamic EGPRS channel according to the coding scheme used by the GPRS user equipment, determine whether the GPRS user equipment uses a preset coding scheme, and if yes, reserve one primary link and one secondary link that are bound to the dynamic EGPRS channel, and release other Abis links bound to the dynamic EGPRS channel; otherwise, reserve only one primary Abis link bound to the dynamic EGPRS channel, and release other Abis links bound to the dynamic EGPRS channel.

As shown in FIG. 9, a device for link release in a ninth embodiment of the present application includes:
a processor 900, configured to: if a dynamic enhanced general packet radio service EGPRS channel is occupied by a GPRS user equipment, and no EGPRS user equipment is allocated to the dynamic EGPRS channel before a channel release timer corresponding to the dynamic EGPRS channel expires, perform first link release processing for the dynamic EGPRS channel by using a transceiver 910 after an Abis timeslot release timer corresponding to the dynamic EGPRS channel expires; and if the dynamic EGPRS channel is in an idle state, perform second link release processing for the dynamic EGPRS channel by using the transceiver 910 after the Abis timeslot release timer corresponding to the dynamic EGPRS channel expires; and
the transceiver 910, configured to transmit and receive information under control of the processor 900, where
Abis links bound to the dynamic EGPRS channel are dynamically allocated, and idle Abis links are Abis links that are not bound to any one EGPRS channel.

Preferably, the processor 900 is specifically configured to:
when performing first link release processing for the dynamic EGPRS channel, if a coding scheme used by the GPRS user equipment can be determined, perform link release processing for the dynamic EGPRS channel according to the coding scheme used by the GPRS user equipment; otherwise, reserve one primary link and one secondary link that are bound to the dynamic EGPRS channel, and release other unused Abis links bound to the dynamic EGPRS channel; or reserve one primary link and one secondary link that are bound to the dynamic EGPRS channel, and release other Abis links bound to the dynamic EGPRS channel.

Preferably, the processor 900 is specifically configured to:
when performing second link release processing for the dynamic EGPRS channel, if the dynamic EGPRS channel is occupied by the GPRS user equipment before the dynamic EGPRS channel is in the idle state, and a coding scheme used by the GPRS user equipment can be determined, perform link release processing for the dynamic EGPRS channel according to the coding scheme used by the GPRS user equipment; otherwise, reserve only one primary Abis link bound to the EGPRS channel, and release other unused Abis links bound to the EGPRS channel; or reserve only one primary Abis link bound to the dynamic EGPRS channel, and release other Abis links bound to the dynamic EGPRS channel.

Preferably, the processor 900 is specifically configured to:
when performing link release processing for the dynamic EGPRS channel according to the coding scheme used by the GPRS user equipment, determine whether the GPRS user equipment uses a preset coding scheme, and if yes, reserve one primary link and one secondary link that are bound to the dynamic EGPRS channel, and release other Abis links bound to the dynamic EGPRS channel; otherwise, reserve only one primary Abis link bound to the dynamic EGPRS channel, and release other Abis links bound to the dynamic EGPRS channel.

In FIG. 9, a bus architecture may include any quantity of interconnecting buses and bridges, which specifically interconnect various circuits of one or more processors represented by the processor 900 and a memory represented by a memory 920. The bus architecture may further interconnect various other circuits such as a peripheral device, a voltage regulator, and a power management circuit. These are all well known in the art, and therefore are not further described in the specification. A bus interface provides an interface. The transceiver 910 may be multiple elements, that is, may include a transmitter and a receiver, providing units for communicating with various other apparatuses on a transmission medium. The processor 900 is responsible for managing the bus architecture and general processing. The memory 920 may store data used when the processor 900 executes an operation.

The device in the embodiment of the present application may be a base station (for example, a macro base station and a home base station), or may be an RN (relay) device, or may be other network-side devices.

A person skilled in the art should understand that the embodiments of the present application may be provided as a method, a system, or a computer program product. Therefore, the present application may use a form of hardware only embodiments, software only embodiments, or embodiments with a combination of software and hardware. Moreover, the present application may use a form of a computer program product that is implemented on one or more computer-usable storage media (including but not limited to a disk memory, a CD-ROM, an optical memory, and the like) that include computer-usable program code.

The present application is described with reference to the flowcharts and/or block diagrams of the method, the device (system), and the computer program product according to the embodiments of the present application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may also be stored in a computer readable memory that can instruct the computer or any other programmable data processing device to work in a specific manner, so that the instructions stored in the computer readable memory generate an artifact that includes an instruction apparatus. The instruction apparatus implements a specific function in one or more processes in the flowcharts and/or in one or more blocks in the block diagrams.

These computer program instructions may also be loaded onto a computer or another programmable data processing device, so that a series of operations and steps are performed on the computer or the another programmable device, therefore generating computer-implemented processing. Therefore, the instructions executed on the computer or the another programmable device provide steps for implementing a specific function in one or more processes in the flowcharts and/or in one or more blocks in the block diagrams.

Although some preferred embodiments of the present application have been described, persons skilled in the art can make changes and modifications to these embodiments once they learn the basic inventive concept. Therefore, the following claims are intended to be construed as to cover the preferred embodiments and all changes and modifications falling within the scope of the present application.

## Claims

1. A method for channel allocation comprising:
during access of an enhanced general packet radio service, EGPRS, user equipment, determining Abis link resources of N candidate channel groups, wherein N is a positive integer; and
selecting a specific channel group from the candidate channel groups according to the Abis link resources of the candidate channel groups, and allocating the selected specific channel group to the EGPRS user equipment, wherein
any one channel group of the candidate channel groups comprises at least one EGPRS channel;
**characterized in that**
the selecting a specific channel group from the candidate channel groups according to the Abis link resources of the candidate channel groups comprises:
if there is one channel group having maximum Abis link resources in the candidate channel groups, selecting the channel group having the maximum Abis link resources, as the specific channel group; or
if there is more than one channel group having the maximum Abis link resources in the candidate channel groups, selecting, from channel groups having maximum Abis link resources in the candidate channel groups, a channel group having minimum load as the specific channel group.

2. The method according to claim 1 , wherein the determining Abis link resources of N candidate channel groups comprises:
determining Abis link resources of each EGPRS channel in any one channel group of the N candidate channel groups; and
obtaining Abis link resources of the any one channel group according to the determined Abis link resources of each EGPRS channel.

3. The method according to claim 2, wherein the determining Abis link resources of each EGPRS channel in any one channel group of the N candidate channel groups comprises:
for an EGPRS channel in the any one channel group, if current load of the EGPRS channel is not greater than a comparison threshold, using a sum of actual Abis link resources of all EGPRS channels in a candidate channel group to which the EGPRS channel belongs, as Abis link resources of the EGPRS channel; and if the current load of the EGPRS channel is greater than the comparison threshold, determining that the quantity of Abis link resources of the EGPRS channel is a set value.

4. The method according to any one of claims 1 to 3, wherein the candidate channel groups comprise a dynamic EGPRS channel, and the method further comprises:
if Abis links bound to the dynamic EGPRS channel are less than the maximum Abis link resources, and idle Abis links exist currently, binding the idle Abis links to the any one EGPRS channel.

5. The method according to claim 4, wherein the method further comprises:
if the dynamic EGPRS channel is occupied by a general packet radio service GPRS user equipment, and no EGPRS user equipment is allocated to the dynamic EGPRS channel before a channel release timer corresponding to the dynamic EGPRS channel expires, performing first link release processing for the dynamic EGPRS channel after an Abis timeslot release timer corresponding to the dynamic EGPRS channel expires; or
if the dynamic EGPRS channel is in an idle state, performing second link release processing for the dynamic EGPRS channel after an Abis timeslot release timer corresponding to the dynamic EGPRS channel expires, wherein
Abis links bound to the dynamic EGPRS channel are dynamically allocated, and the idle Abis links are Abis links that are not bound to any one EGPRS channel.

6. The method according to claim 5, wherein the performing first link release processing for the dynamic EGPRS channel if the dynamic EGPRS channel is occupied by a GPRS user equipment comprises:
if a coding scheme used by the GPRS user equipment can be determined, performing link release processing for the dynamic EGPRS channel according to the coding scheme used by the GPRS user equipment; if the coding scheme used by the GPRS user equipment can not be determined, reserving one primary link and one secondary link that are bound to the dynamic EGPRS channel, and releasing other unused Abis links bound to the dynamic EGPRS channel; or
reserving one primary link and one secondary link that are bound to the dynamic EGPRS channel, and releasing other Abis links bound to the dynamic EGPRS channel.

7. The method according to claim 5, wherein the performing second link release processing for the dynamic EGPRS channel if the dynamic EGPRS channel is in an idle state comprises:
if the dynamic EGPRS channel is occupied by the GPRS user equipment before the dynamic EGPRS channel is in the idle state, and a coding scheme used by the GPRS user equipment can be determined, performing link release processing for the dynamic EGPRS channel according to the coding scheme used by the GPRS user equipment; otherwise, reserving only one primary Abis link bound to the EGPRS channel, and releasing other unused Abis links bound to the EGPRS channel; or
reserving only one primary Abis link bound to the dynamic EGPRS channel, and releasing other Abis links bound to the dynamic EGPRS channel.

8. The method according to claim 6 or 7, wherein the performing link release processing for the dynamic EGPRS channel according to the coding scheme used by the GPRS user equipment comprises:
determining whether the GPRS user equipment uses a preset coding scheme, and if the GPRS user equipment uses the preset coding scheme, reserving one primary link and one secondary link that are bound to the dynamic EGPRS channel, and releasing other Abis links bound to the dynamic EGPRS channel; and, if the GPRS user equipment does not use the preset coding scheme, reserving only one primary Abis link bound to the dynamic EGPRS channel, and releasing other Abis links bound to the dynamic EGPRS channel.

9. A device for channel allocation comprising:
a determining module (500), configured to determine Abis link resources of N candidate channel groups during access of an enhanced general packet radio service, EGPRS, user equipment, wherein N is a positive integer; and
an allocating module (510), configured to select a specific channel group from the candidate channel groups according to the Abis link resources of the candidate channel groups, and allocate the selected specific channel group to the EGPRS user equipment, wherein
any one channel group of the candidate channel groups comprises at least one EGPRS channel;
**characterized in that**
the allocating module is configured to:
when selecting a specific channel group from the candidate channel groups according to the Abis link resources of the candidate channel groups, if there is one channel group having maximum Abis link resources in the candidate channel groups, select the channel group having the maximum Abis link resources, as the specific channel group; or, if there is more than one channel group having maximum Abis resources in the candidate channel groups, select a channel group having minimum load from channel groups having maximum Abis link resources in the candidate channel groups, as the specific channel group.

10. The device according to claim 9, wherein the determining module is configured to:
determine Abis link resources of each EGPRS channel in any one channel group of the N candidate channel groups; and obtain Abis link resources of the any one channel group according to the determined Abis link resources of each EGPRS channel.

11. The device according to claim 10, wherein the determining module is configured to:
when determining Abis link resources of each EGPRS channel in any one channel group of the N candidate channel groups, for an EGPRS channel in the any one channel group, if current load of the EGPRS channel is not greater than a comparison threshold, use a sum of actual Abis link resources of all EGPRS channels in a candidate channel group to which the EGPRS channel belongs, as Abis link resources of the EGPRS channel; and if the current load of the EGPRS channel is greater than the comparison threshold, determine that Abis link resources of the EGPRS channel are a set value.

12. The device according to any one of claims 9 to 11, wherein the candidate channel groups comprise a dynamic EGPRS channel, and the device further comprises:
a first binding module (520), configured to: if Abis links bound to the dynamic EGPRS channel are less than the maximum Abis link resources, and idle Abis links exist currently, bind the idle Abis links to the any one EGPRS channel.

13. The device according to claim 12, wherein the device further comprises:
a releasing module (540), configured to: if the dynamic EGPRS channel is occupied by a general packet radio service GPRS user equipment, and no EGPRS user equipment is allocated to the dynamic EGPRS channel before a channel release timer corresponding to the dynamic EGPRS channel expires, perform first link release processing for the dynamic EGPRS channel after an Abis timeslot release timer corresponding to the dynamic EGPRS channel expires; or if the dynamic EGPRS channel is in an idle state, perform second link release processing for the dynamic EGPRS channel after an Abis timeslot release timer corresponding to the dynamic EGPRS channel expires, wherein
Abis links bound to the dynamic EGPRS channel are dynamically allocated, and the idle Abis links are Abis links that are not bound to any one EGPRS channel.

14. The device according to claim 13, wherein the releasing module is configured to:
when performing first link release processing for the dynamic EGPRS channel, if a coding scheme used by the GPRS user equipment can be determined, perform link release processing for the dynamic EGPRS channel according to the coding scheme used by the GPRS user equipment; if the coding scheme used by the GPRS user equipment can not be determined, reserve one primary link and one secondary link that are bound to the dynamic EGPRS channel, and release other unused Abis links bound to the dynamic EGPRS channel; or reserve one primary link and one secondary link that are bound to the dynamic EGPRS channel, and release other Abis links bound to the dynamic EGPRS channel.

15. The device according to claim 13, wherein the releasing module is configured to:
when performing second link release processing for the dynamic EGPRS channel, if the dynamic EGPRS channel is occupied by the GPRS user equipment before the dynamic EGPRS channel is in the idle state, and a coding scheme used by the GPRS user equipment can be determined, perform link release processing for the dynamic EGPRS channel according to the coding scheme used by the GPRS user equipment; otherwise, reserve only one primary Abis link bound to the EGPRS channel, and release other unused Abis links bound to the EGPRS channel; or reserve only one primary Abis link bound to the dynamic EGPRS channel, and release other Abis links bound to the dynamic EGPRS channel.

## Patentansprüche

1. Verfahren zur Kanalzuteilung, umfassend:
während eines Zugriffs eines verbesserten allgemeinen paketorientierten Funkdienst(Enhanced General Packet Radio Service, EGPRS)-Benutzergerätes, Bestimmen von Abis-Verbindungsressourcen von N in Frage kommenden Kanalgruppen, wobei N eine positive ganze Zahl ist; und
Auswählen einer speziellen Kanalgruppe aus den in Frage kommenden Kanalgruppen gemäß den Abis-Verbindungsressourcen der in Frage kommenden Kanalgruppen und Zuteilen der ausgewählten speziellen Kanalgruppe zu dem EGPRS-Benutzergerät, wobei
jede beliebige Kanalgruppe der in Frage kommenden Kanalgruppen mindestens einen EGPRS-Kanal aufweist;
**dadurch gekennzeichnet, dass**
das Auswählen einer speziellen Kanalgruppe aus den in Frage kommenden Kanalgruppen gemäß den Abis-Verbindungsressourcen der in Frage kommenden Kanalgruppen umfasst:
falls eine Kanalgruppe vorhanden ist, die maximale Abis-Verbindungsressourcen in den in Frage kommenden Kanalgruppen aufweist, Auswählen der Kanalgruppe mit den maximalen Abis-Verbindungsressourcen, als die spezielle Kanalgruppe; oder
falls mehr als eine Kanalgruppe mit den maximalen Abis-Verbindungsressourcen in den in Frage kommenden Kanalgruppen vorhanden ist, Auswählen einer Kanalgruppe mit einer minimalen Last aus Kanalgruppen mit maximalen Abis-Verbindungsressourcen in den in Frage kommenden Kanalgruppen als die spezielle Kanalgruppe.

2. Verfahren nach Anspruch 1, wobei das Bestimmen der Abis-Verbindungsressourcen von N in Frage kommenden Kanalgruppen umfasst:
Bestimmen von Abis-Verbindungsressourcen jedes EGPRS-Kanals in jeder beliebigen Kanalgruppe der N in Frage kommenden Kanalgruppen; und
Gewinnen von Abis-Verbindungsressourcen der beliebigen Kanalgruppe gemäß den bestimmten Abis-Verbindungsressourcen jedes EGPRS-Kanals.

3. Verfahren nach Anspruch 2, wobei das Bestimmen der Abis-Verbindungsressourcen jedes EGPRS-Kanals in jeder beliebigen Kanalgruppe der N in Frage kommenden Kanalgruppen umfasst:
für einen EGPRS-Kanal in der beliebigen Kanalgruppe, falls eine momentane Last des EGPRS-Kanals nicht größer ist als ein Vergleichsschwellenwert, Verwenden einer Summe tatsächlicher Abis-Verbindungsressourcen sämtlicher EGPRS-Kanäle in einer in Frage kommenden Kanalgruppe, zu der der EGPRS-Kanal gehört, als Abis-Verbindungsressourcen des EGPRS-Kanals; und falls die aktuelle Last des EGPRS-Kanals größer ist als der Vergleichsschwellenwert, Bestimmen, ob die Menge von Abis-Verbindungsressourcen des EGPRS-Kanals ein eingestellter Wert ist.

4. Verfahren nach einem beliebigen der Ansprüche 1 bis 3, wobei die in Frage kommenden Kanalgruppen einen dynamischen EGPRS-Kanal aufweisen, und das Verfahren ferner umfasst:
falls weniger Abis-Verbindungen, die an den dynamischen EGPRS-Kanal gebunden sind, vorhanden sind als die maximalen Abis-Verbindungsressourcen, und aktuell ruhende Abis-Verbindungen vorhanden sind, Binden der ruhenden Abis-Verbindungen an den beliebigen EGPRS-Kanal.

5. Verfahren nach Anspruch 4, wobei das Verfahren ferner aufweist:
falls der dynamische EGPRS-Kanal durch ein allgemeines paketorientiertes Funkdienst(General Packet Radio Service, GPRS)-Benutzergerät besetzt ist, und dem dynamischen EGPRS-Kanal kein EGPRS-Benutzergerät zugeteilt ist, bevor ein Kanalfeigabezeitgeber, der dem dynamischen EGPRS-Kanal entspricht, abläuft, Durchführen eines ersten Verbindungsfreigabevorgangs für den dynamischen EGPRS-Kanal, nachdem ein Abis-Zeitschlitz-Freigabezeitgeber, der dem dynamischen EGPRS-Kanal entspricht, abläuft; oder
falls sich der dynamische EGPRS-Kanal in einem Ruhezustand befindet, Durchführen eines zweiten Verbindungsfreigabevorgangs für den dynamischen EGPRS-Kanal, nachdem ein Abis-Zeitschlitz-Freigabezeitgeber, der dem dynamischen EGPRS-Kanal entspricht, abläuft, wobei
Abis-Verbindungen, die an den dynamischen EGPRS-Kanal gebunden sind, dynamisch zugeteilt werden, und die ruhenden Abis-Verbindungen Abis-Verbindungen sind, die nicht an irgend einen EGPRS-Kanal gebunden sind.

6. Verfahren nach Anspruch 5, wobei das Durchführen eines ersten Verbindungsfreigabevorgangs für den dynamischen EGPRS-Kanal, falls der dynamische EGPRS-Kanal durch ein GPRS-Benutzergerät besetzt ist, umfasst:
falls ein Kodierungsschema, das von dem GPRS-Benutzergerät verwendet wird, bestimmt werden kann, Durchführen eines Verbindungsfreigabevorgangs für den dynamischen EGPRS-Kanal gemäß dem Kodierungsschema, das von dem GPRS-Benutzergerät verwendet wird; falls das Kodierungsschema, das von dem GPRS-Benutzergerät verwendet wird, nicht bestimmt werden kann, Reservieren einer Primärverbindung und einer Sekundärverbindung, die an den dynamischen EGPRS-Kanal gebunden sind, und Freigeben anderer unbenutzter Abis-Verbindungen, die an den dynamischen EGPRS-Kanal gebunden sind; oder
Reservieren einer Primärverbindung und einer Sekundärverbindung, die an den dynamischen EGPRS-Kanal gebunden sind, und Freigeben anderer Abis-Verbindungen, die an den dynamischen EGPRS-Kanal gebunden sind.

7. Verfahren nach Anspruch 5, wobei das Durchführen des zweiten Verbindungsfreigabevorgangs für den dynamischen EGPRS-Kanal, falls der dynamische EGPRS-Kanal sich in einem Ruhezustand befindet, umfasst:
falls der dynamische EGPRS-Kanal durch das GPRS-Benutzergerät besetzt ist, bevor sich der dynamische EGPRS-Kanal in dem Ruhezustand befindet, und ein Kodierungsschema, das von dem GPRS-Benutzergerät verwendet wird, bestimmt werden kann, Durchführen eines Verbindungsfreigabevorgangs für den dynamischen EGPRS-Kanal gemäß dem Kodierungsschema, das von dem GPRS-Benutzergerät verwendet wird; anderweitig, Reservieren einer primären Abis-Verbindung, die an den EGPRS-Kanal gebunden ist, und Freigeben anderer unbenutzter Abis-Verbindungen, die an den EGPRS-Kanal gebunden sind; oder
Reservieren einer primären Abis-Verbindung, die an den dynamischen EGPRS-Kanal gebunden ist, und Freigeben anderer Abis-Verbindungen, die an den dynamischen EGPRS-Kanal gebunden sind.

8. Verfahren nach Anspruch 6 oder 7, wobei das Durchführen des Verbindungsfreigabevorgangs für den dynamischen EGPRS-Kanal gemäß dem Kodierungsschema, das von dem GPRS-Benutzergerät verwendet wird, aufweist:
Bestimmen, ob das GPRS-Benutzergerät ein voreingestelltes Kodierungsschema verwendet, und falls das GPRS-Benutzergerät das voreingestellte Kodierungsschema verwendet, Reservieren einer Primärverbindung und einer Sekundärverbindung, die an den dynamischen EGPRS-Kanal gebunden sind, und Freigeben anderer Abis-Verbindungen, die an den dynamischen EGPRS-Kanal gebunden sind; und falls das GPRS-Benutzergerät das voreingestellte Kodierungsschema nicht verwendet, Reservieren einer primären Abis-Verbindung, die an den dynamischen EGPRS-Kanal gebunden ist, und Freigeben anderer Abis-Verbindungen, die an den dynamischen EGPRS-Kanal gebunden sind.

9. Vorrichtung zur Kanalzuteilung, aufweisend:
ein Bestimmungsmodul (500), das dafür ausgelegt ist, Abis-Verbindungsressourcen von N in Frage kommenden Kanalgruppen während eines Zugriffs eines verbesserten allgemeinen paketorientierten Funkdienst(Enhanced General Packet Radio Service, EGPRS)-Benutzergerätes zu bestimmen, wobei N eine positive ganze Zahl ist; und
ein Zuteilungsmodul (510), das dafür ausgelegt ist, eine spezielle Kanalgruppe aus den in Frage kommenden Kanalgruppen gemäß den Abis-Verbindungsressourcen der in Frage kommenden Kanalgruppen auszuwählen und die ausgewählte spezielle Kanalgruppe dem EGPRS-Benutzergerät zuzuteilen, wobei jede beliebige Kanalgruppe der in Frage kommenden Kanalgruppen mindestens einen EGPRS-Kanal aufweist;
**dadurch gekennzeichnet, dass**
das Zuteilungsmodul dafür ausgelegt ist:
bei dem Auswählen einer speziellen Kanalgruppe aus den in Frage kommenden Kanalgruppen gemäß den Abis-Verbindungsressourcen der in Frage kommenden Kanalgruppen, falls eine Kanalgruppe vorhanden ist, die maximale Abis-Verbindungsressourcen in den in Frage kommenden Kanalgruppen aufweist, die Kanalgruppe mit den maximalen Abis-Verbindungsressourcen als die spezielle Kanalgruppe auszuwählen; oder, falls mehr als eine Kanalgruppe mit maximalen Abis-Ressourcen in den in Frage kommenden Kanalgruppen vorhanden ist, eine Kanalgruppe mit einer minimalen Last aus Kanalgruppen mit maximalen Abis-Verbindungsressourcen in den in Frage kommenden Kanalgruppen als die spezielle Kanalgruppe auszuwählen.

10. Vorrichtung nach Anspruch 9, wobei das Bestimmungsmodul dafür ausgelegt ist:
Abis-Verbindungsressourcen jedes EGPRS-Kanals in jeder beliebigen Kanalgruppe der N in Frage kommenden Kanalgruppen zu bestimmen; und Abis-Verbindungsressourcen der beliebigen Kanalgruppe gemäß den bestimmten Abis-Verbindungsressourcen jedes EGPRS-Kanals zu gewinnen.

11. Vorrichtung nach Anspruch 10, wobei das Bestimmungsmodul dafür ausgelegt ist:
bei einem Bestimmen von Abis-Verbindungsressourcen jedes EGPRS-Kanals in jeder beliebigen Kanalgruppe der N in Frage kommenden Kanalgruppen für einen EGPRS-Kanal in der beliebigen Kanalgruppe, falls eine momentane Last des EGPRS-Kanals nicht größer ist als ein Vergleichsschwellenwert, eine Summe von tatsächlichen Abis-Verbindungsressourcen sämtlicher EGPRS-Kanäle in einer in Frage kommenden Kanalgruppe, zu der der EGPRS-Kanal gehört, als Abis-Verbindungsressourcen des EGPRS-Kanals zu verwenden; und falls die aktuelle Last des EGPRS-Kanals größer ist als der Vergleichsschwellenwert, zu bestimmen, dass Abis-Verbindungsressourcen des EGPRS-Kanals ein eingestellter Wert sind.

12. Vorrichtung nach einem beliebigen der Ansprüche 9 bis 11, wobei die in Frage kommenden Kanalgruppen einen dynamische EGPRS-Kanal aufweisen, und die Vorrichtung ferner aufweist:
ein erstes Bindungsmodul (520), das dafür ausgelegt ist: falls weniger Abis-Verbindungen, die an den dynamischen EGPRS-Kanal gebunden sind, vorhanden sind als die maximale Abis-Verbindungsressourcen, und aktuell ruhende Abis-Verbindungen vorliegen, die ruhenden Abis-Verbindungen an den beliebigen EGPRS-Kanal zu binden.

13. Vorrichtung nach Anspruch 12, wobei die Vorrichtung ferner aufweist:
ein Freigabemodul (540), das dafür ausgelegt ist: falls der dynamische EGPRS-Kanal durch ein allgemeine paketorientiertes Funkdienst-GPRS-Benutzergerät besetzt ist, und dem dynamischen EGPRS-Kanal kein EGPRS-Benutzergerät zugeteilt ist, bevor ein Kanalfeigabezeitgeber, der dem dynamischen EGPRS-Kanal entspricht, abläuft, einen ersten Verbindungsfreigabevorgang für den dynamischen EGPRS-Kanal durchzuführen, nachdem ein Abis-Zeitschlitz-Freigabezeitgeber, der dem dynamischen EGPRS-Kanal entspricht, abläuft; oder, falls sich der dynamische EGPRS-Kanal in einem Ruhezustand befindet, einen zweiten Verbindungsfreigabevorgang für den dynamischen EGPRS-Kanal durchzuführen, nachdem ein Abis-Zeitschlitz-Freigabezeitgeber, der dem dynamischen EGPRS-Kanal entspricht, abläuft, wobei
Abis-Verbindungen, die an den dynamischen EGPRS-Kanal gebunden sind, dynamisch zugeteilt werden, und die ruhenden Abis-Verbindungen Abis-Verbindungen sind, die nicht an irgendeinen EGPRS-Kanal gebunden sind.

14. Vorrichtung nach Anspruch 13, wobei das Freigabemodul dafür ausgelegt ist:
bei einer Durchführung eines ersten Verbindungsfreigabevorgangs für den dynamischen EGPRS-Kanal, falls ein Kodierungsschema, das von dem GPRS-Benutzergerät verwendet wird, bestimmt werden kann, einen Verbindungsfreigabevorgang für den dynamischen EGPRS-Kanal gemäß dem Kodierungsschema, das von dem GPRS-Benutzergerät verwendet wird, durchzuführen; falls das Kodierungsschema, das von dem GPRS-Benutzergerät verwendet wird, nicht bestimmt werden kann, eine Primärverbindung und eine Sekundärverbindung zu reservieren, die an den dynamischen EGPRS-Kanal gebunden sind, und andere unbenutzte Abis-Verbindungen, die an den dynamischen EGPRS-Kanal gebunden sind, freizugeben; oder eine Primärverbindung und eine Sekundärverbindung, die an den dynamischen EGPRS-Kanal gebunden sind, zu reservieren und andere Abis-Verbindungen, die an den dynamischen EGPRS-Kanal gebunden sind, freizugeben.

15. Vorrichtung nach Anspruch 13, wobei das Freigabemodul dafür ausgelegt ist:
bei einer Durchführung eines zweiten Verbindungsfreigabevorgangs für den dynamischen EGPRS-Kanal, falls der dynamische EGPRS-Kanal durch das GPRS-Benutzergerät besetzt ist, bevor sich der dynamische EGPRS-Kanal in dem Ruhezustand befindet und ein Kodierungsschema, das von dem GPRS-Benutzergerät verwendet wird, bestimmt werden kann, einen Verbindungsfreigabevorgang für den dynamischen EGPRS-Kanal gemäß dem Kodierungsschema, das von dem GPRS-Benutzergerät verwendet wird, durchzuführen; anderweitig, eine primäre Abis-Verbindung, die an den EGPRS-Kanal gebunden ist, zu reservieren und andere unbenutzte Abis-Verbindungen, die an den EGPRS-Kanal gebunden sind, freizugeben; oder eine primäre Abis-Verbindung, die an den dynamischen EGPRS-Kanal gebunden ist, zu reservieren und andere Abis-Verbindungen, die an den dynamischen EGPRS-Kanal gebunden sind, freizugeben.

## Revendications

1. Procédé pour l'attribution de canal, comprenant :
durant l'accès d'un équipement utilisateur de service général amélioré de radiocommunication par paquets, EGPRS, la détermination de ressources de liaison Abis de N groupes de canaux candidats, dans lequel N est un nombre entier relatif positif ; et
la sélection d'un groupe de canaux spécifique à partir des groupes de canaux candidats selon les ressources de liaison Abis des groupes de canaux candidats, et l'attribution d'un groupe de canaux spécifique sélectionné à l'équipement utilisateur d'EGPRS, dans lequel
un quelconque groupe de canaux des groupes de canaux candidats comprend au moins un canal d'EGPRS ;
**caractérisé en ce que**
la sélection d'un groupe de canaux spécifique à partir des groupes de canaux candidats selon les ressources de liaison Abis des groupes de canaux candidats comprend :
s'il y a un groupe de canaux ayant des ressources de liaison Abis maximums dans les groupes de canaux candidats, la sélection du groupe de canaux ayant les ressources de liaison Abis maximums, en tant que groupe de canaux spécifique ; ou
s'il y a plus d'un groupe de canaux ayant les ressources de liaison Abis maximums dans les groupes de canaux candidats, la sélection, à partir de groupes de canaux ayant des ressources de liaison Abis maximums dans les groupes de canaux candidats, d'un groupe de canaux ayant une charge minimum en tant que groupe de canaux spécifique.

2. Procédé selon la revendication 1, dans lequel la détermination de ressources de liaison Abis de N groupes de canaux candidats comprend :
la détermination de ressources de liaison Abis de chaque canal d'EGPRS dans un quelconque groupe de canaux des N groupes de canaux candidats ; et
l'obtention de ressources de liaison Abis de l'un quelconque groupe de canaux selon les ressources de liaison Abis déterminées de chaque canal d'EGPRS.

3. Procédé selon la revendication 2, dans lequel la détermination de ressources de liaison Abis de chaque canal d'EGPRS dans un quelconque groupe de canaux des N groupes de canaux candidats comprend :
pour un canal d'EGPRS dans l'un quelconque groupe de canaux, si une charge actuelle du canal d'EGPRS n'est pas supérieure à un seuil de comparaison, l'utilisation d'une somme de ressources de liaison Abis réelles de tous les canaux d'EGPRS dans un groupe de canaux candidat auquel le canal d'EGPRS appartient, en tant que ressources de liaison Abis du canal d'EGPRS ; et si la charge actuelle du canal d'EGPRS est supérieure au seuil de comparaison, la détermination que la quantité de ressources de liaison Abis du canal d'EGPRS est une valeur définie.

4. Procédé selon l'une quelconque des revendications 1 à 3, dans lequel les groupes de canaux candidats comprennent un canal d'EGPRS dynamique, et le procédé comprend en outre :
si des liaisons Abis attachées au canal d'EGPRS dynamique sont inférieures aux ressources de liaison Abis maximums, et des liaisons Abis inactives existent actuellement, l'attache des liaisons Abis inactives à l'un quelconque canal d'EGPRS.

5. Procédé selon la revendication 4, dans lequel le procédé comprend en outre :
si le canal d'EGPRS dynamique est occupé par un équipement utilisateur de service général de radiocommunication par paquets, GPRS, et aucun équipement utilisateur d'EGPRS n'est attribué au canal d'EGPRS dynamique avant qu'une minuterie de libération de canal correspondant au canal d'EGPRS dynamique expire, la réalisation d'un premier traitement de libération de liaison pour le canal d'EGPRS dynamique après qu'une minuterie de libération de créneau temporel Abis correspondant au canal d'EGPRS dynamique expire ; ou
si le canal d'EGPRS dynamique est dans un état inactif, la réalisation d'un second traitement de libération de liaison pour le canal d'EGPRS dynamique après qu'une minuterie de libération de créneau temporel Abis correspondant au canal d'EGPRS dynamique expire, dans lequel
des liaisons Abis attachées au canal d'EGPRS dynamique sont dynamiquement attribuées, et les liaisons Abis inactives sont des liaisons Abis qui ne sont attachées à aucun canal d'EGPRS.

6. Procédé selon la revendication 5, dans lequel la réalisation du premier traitement de libération de liaison pour le canal d'EGPRS dynamique si le canal d'EGPRS dynamique est occupé par un équipement utilisateur de GPRS comprend :
si un plan de codage utilisé par l'équipement utilisateur de GPRS peut être déterminé, la réalisation d'un traitement de libération de liaison pour le canal d'EGPRS dynamique selon le plan de codage utilisé par l'équipement utilisateur de GPRS ; si le plan de codage utilisé par l'équipement utilisateur de GPRS ne peut pas être déterminé, la réservation d'une liaison primaire et d'une liaison secondaire qui sont attachées au canal d'EGPRS dynamique, et la libération d'autres liaisons Abis non utilisées attachées au canal d'EGPRS dynamique ; ou
la réservation d'une liaison primaire et d'une liaison secondaire qui sont attachées au canal d'EGPRS dynamique, et la libération d'autres liaisons Abis attachées au canal d'EGPRS dynamique.

7. Procédé selon la revendication 5, dans lequel la réalisation du second traitement de libération de liaison pour le canal d'EGPRS dynamique si le canal d'EGPRS dynamique est dans un état inactif comprend :
si le canal d'EGPRS dynamique est occupé par l'équipement utilisateur de GPRS avant que le canal d'EGPRS dynamique soit dans l'état inactif, et un plan de codage utilisé par l'équipement utilisateur de GPRS peut être déterminé, la réalisation d'un traitement de libération de liaison pour le canal d'EGPRS dynamique selon le plan de codage utilisé par l'équipement utilisateur de GPRS ; autrement, la réservation d'une seule liaison Abis primaire attachée au canal d'EGPRS, et la libération d'autres liaisons Abis non utilisées attachées au canal d'EGPRS ; ou
la réservation d'une seule liaison Abis primaire attachée au canal d'EGPRS dynamique, et la libération d'autres liaisons Abis attachées au canal d'EGPRS dynamique.

8. Procédé selon la revendication 6 ou 7, dans lequel la réalisation du traitement de libération de liaison pour le canal d'EGPRS dynamique selon le plan de codage utilisé par l'équipement utilisateur de GPRS comprend :
la détermination que l'équipement utilisateur de GPRS utilise ou non un plan de codage prédéfini, et si l'équipement utilisateur de GPRS utilise le plan de codage prédéfini, la réservation d'une liaison primaire et d'une liaison secondaire qui sont attachées au canal d'EGPRS dynamique, et la libération d'autres liaisons Abis attachées au canal d'EGPRS dynamique ; et, si l'équipement utilisateur de GPRS n'utilise pas le plan de codage prédéfini, la réservation d'une seule liaison Abis primaire attachée au canal d'EGPRS dynamique, et la libération d'autres liaisons Abis attachées au canal d'EGPRS dynamique.

9. Dispositif pour l'attribution de canal, comprenant :
un module de détermination (500), configuré pour déterminer des ressources de liaison Abis de N groupes de canaux candidats durant l'accès d'un équipement utilisateur de service général amélioré de radiocommunication par paquets, EGPRS, dans lequel N est un nombre entier relatif positif ; et
un module d'attribution (510), configuré pour sélectionner un groupe de canaux spécifique à partir des groupes de canaux candidats selon les ressources de liaison Abis des groupes de canaux candidats, et attribuer un groupe de canaux spécifique sélectionné à l'équipement utilisateur d'EGPRS, dans lequel
un quelconque groupe de canaux des groupes de canaux candidats comprend au moins un canal d'EGPRS ;
**caractérisé en ce que**
le module d'attribution est configuré pour :
lors de la sélection d'un groupe de canaux spécifique à partir des groupes de canaux candidats selon les ressources de liaison Abis des groupes de canaux candidats, s'il y a un groupe de canaux ayant des ressources de liaison Abis maximums dans les groupes de canaux candidats, sélectionner le groupe de canaux ayant les ressources de liaison Abis maximums, en tant que groupe de canaux spécifique ; ou, s'il y a plus d'un groupe de canaux ayant des ressources Abis maximums dans les groupes candidats, sélectionner un groupe de canaux ayant une charge minimum à partir de groupes de canaux candidats ayant des ressources de liaison Abis maximums dans les groupes de canaux candidats, en tant que groupe de canaux spécifique.

10. Dispositif selon la revendication 9, dans lequel le module de détermination est configuré pour :
déterminer des ressources de liaison Abis de chaque canal d'EGPRS dans un quelconque groupe de canaux des N groupes de canaux candidats ; et obtenir des ressources de liaison Abis de l'un quelconque groupe de canaux selon les ressources de liaison Abis déterminées de chaque canal d'EGPRS.

11. Dispositif selon la revendication 10, dans lequel le module de détermination est configuré pour :
lorsque la détermination de ressources de liaison Abis de chaque canal d'EGPRS dans un quelconque groupe de canaux des N groupes de canaux candidats, pour un canal d'EGPRS dans l'un quelconque groupe de canaux, si une charge actuelle du canal d'EGPRS n'est pas supérieure à un seuil de comparaison, utiliser une somme de ressources de liaison Abis réelles de tous les canaux d'EGPRS dans un groupe de canaux candidat auquel le canal d'EGPRS appartient, en tant que ressources de liaison Abis du canal d'EGPRS ; et si la charge actuelle du canal d'EGPRS est supérieure au seuil de comparaison, déterminer que des ressources de liaison Abis du canal d'EGPRS sont une valeur définie.

12. Dispositif selon l'une quelconque des revendications 9 à 11, dans lequel les groupes de canaux candidats comprennent un canal d'EGPRS dynamique, et le dispositif comprend en outre :
un premier module d'attache (520), configuré pour : si des liaisons Abis attachées au canal d'EGPRS dynamique sont inférieures aux ressources de liaison Abis maximums, et des liaisons Abis inactives existent actuellement, attacher les liaisons Abis inactives à l'un quelconque canal d'EGPRS.

13. Dispositif selon la revendication 12, dans lequel le dispositif comprend en outre :
un module de libération (540), configuré pour : si le canal d'EGPRS dynamique est occupé par un équipement utilisateur de service général de radiocommunication par paquets, GPRS, et aucun équipement utilisateur d'EGPRS n'est attribué au canal d'EGPRS dynamique avant qu'une minuterie de libération de canal correspondant au canal d'EGPRS dynamique expire, réaliser un premier traitement de libération de liaison pour le canal d'EGPRS dynamique après qu'une minuterie de libération de créneau temporel Abis correspondant au canal d'EGPRS dynamique expire ; ou si le canal d'EGPRS dynamique est dans un état inactif, réaliser un second traitement de libération de liaison pour le canal d'EGPRS dynamique après qu'une minuterie de libération de créneau temporel Abis correspondant au canal d'EGPRS dynamique expire, dans lequel
des liaisons Abis attachées au canal d'EGPRS dynamique sont dynamiquement attribuées, et les liaisons Abis inactives sont des liaisons Abis qui ne sont attachées à aucun canal d'EGPRS.

14. Dispositif selon la revendication 13, dans lequel le module de libération est configuré pour :
lors de la réalisation d'un premier traitement de libération de liaison pour le canal d'EGPRS dynamique, si un plan de codage utilisé par l'équipement utilisateur de GPRS peut être déterminé, réaliser un traitement de libération de liaison pour le canal d'EGPRS dynamique selon le plan de codage utilisé par l'équipement utilisateur de GPRS ; si le plan de codage utilisé par l'équipement utilisateur de GPRS ne peut pas être déterminé, réserver une liaison primaire et une liaison secondaire qui sont attachées au canal d'EGPRS dynamique, et libérer d'autres liaisons Abis non utilisées attachées au canal d'EGPRS dynamique ; ou réserver une liaison primaire et une liaison secondaire qui sont attachées au canal d'EGPRS dynamique, et libérer d'autres liaisons Abis attachées au canal d'EGPRS dynamique.

15. Dispositif selon la revendication 13, dans lequel le module de libération est configuré pour :
lors de la réalisation d'un second traitement de libération de liaison pour le canal d'EGPRS dynamique, si le canal d'EGPRS dynamique est occupé par l'équipement utilisateur de GPRS avant que le canal d'EGPRS dynamique soit dans l'état inactif, et un plan de codage utilisé par l'équipement utilisateur de GPRS peut être déterminé, réaliser un traitement de libération de liaison pour le canal d'EGPRS dynamique selon le plan de codage utilisé par l'équipement utilisateur de GPRS ; autrement, réserver une seule liaison Abis primaire attachée au canal d'EGPRS, et libérer d'autres liaisons Abis non utilisées attachées au canal d'EGPRS ; ou réserver une seule liaison Abis primaire attachée au canal d'EGPRS dynamique, et libérer d'autres liaisons Abis attachées au canal d'EGPRS dynamique.
